# EUROPEAN PATENT APPLICATION

(11) **EP 4 755 758 A2**
(43) Date of publication of application: **10.06.2026**
(21) Application number: 26173316.6
(22) Date of filing: 10.11.2022
(51) Int. Cl.: B62B 9/24

(54) **BABY CARRIER**

(30) Priority: 10.11.2021 CN 202111328969; 10.11.2021 CN 202111327408
(62) Divisional of application: 22817209.4
(71) Applicant: Wonderland Switzerland AG, 6312 Steinhausen (CH)
(72) Inventor: ZHANG, Xiaojian, 6312 Steinhausen (CH)
(74) Representative: Hoffmann Eitle

(57) **Abstract**

A baby carrier includes an armrest fixing base (200), a seat fixing base (400), a connection fixing base (500), a first locking mechanism (810) and a frame assembly (120). The armrest fixing base (200), the seat fixing base (400) and the connection fixing base (500) are coaxially pivoted, the connection fixing base (500) is connected to the frame assembly (120). The first locking mechanism (810) has a locked state and an unlocked state. The armrest fixing base (200) is rotated to convert the first locking mechanism (810) from the locked state to the unlocked state. When the first locking mechanism (810) is in the locked state, the seat fixing base (400) and the connection fixing base (500) are relatively fixed, when the first locking mechanism (810) is in the unlocked state, the seat fixing base (400) and the connection fixing base (500) are capable of rotating relative to each other.

## Description

### CROSS-REFERENCE TO RELATED APPLICATIONS

This application claims priority of Chinese Patent Application No. 2021113274086, filed on November 10, 2021, entitled "SEAT FOLDED WITH ARMREST SUPPORT ROD, SEAT ASSEMBLY AND BABY CARRIER", and Chinese patent application No. 2021113289698, filed on November 10, 2021, entitled "BABY CARRIER", the entire contents of both disclosures are incorporated herein by reference in their entireties.

### TECHNICAL FIELD

The present disclosure relates to carriers, in particular relates to a baby carrier.

### BACKGROUND

Currently, when baby carriers such as strollers are folded, a seat can generally be folded together with a frame assembly to reduce an overall volume of the baby carrier. Generally, when a backrest is rotated, the seat is unlocked to be capable of rotating relative to the frame assembly, which may, however, cause accidental folding of the seat when adjusting the backrest. For some other baby carriers, the backrest is firstly folded to a preset angle, and then the seat is unlocked by operating another operating element. However, an unlocking element for adjusting the angle of the backrest and an unlocking element driven by the operating element usually are the same element, such that it is very difficult to control the unlocking operation, and the seat may be unlocked when the backrest is folded, which is inconvenient to use.

### SUMMARY

According to some embodiments, a baby carrier is provided. The baby carrier includes an armrest fixing base, a seat fixing base, a connection fixing base, a first locking mechanism and a frame assembly. The armrest fixing base and the seat fixing base are coaxially pivoted with the connection fixing base. The connection fixing base disposed on the frame assembly. The armrest fixing base is rotated to convert the first locking mechanism from a locked state to an unlocked state, when the first locking mechanism is in the locked state, the seat fixing base and the connection fixing base are relatively fixed, when the first locking mechanism is in the unlocked state, the seat fixing base and the connection fixing base are capable of rotating relative to each other.

In the baby carrier, the armrest fixing base, the seat fixing base and the connection fixing base are pivoted coaxially in sequence, and the armrest fixing base and the seat fixing base are fixed to the frame assembly through the connection fixing base. The first locking mechanism can control a relative fixing and a relative rotation between the seat fixing base and the connection fixing base. When folding the baby carrier, the armrest fixing base can be rotated, so that the first locking mechanism is converted from the locked state to the unlocked state, and the seat fixing base and the connection fixing base can rotate relative to each other, that is, the entire baby carrier can be folded. An overall volume of the baby carrier after being folded is reduced.

In one of the embodiments, the first locking mechanism includes a first locking element and a first locking groove, the first locking element is disposed on one of the connection fixing base and the seat fixing base, the first locking groove is disposed on the other one of the connection fixing base and the seat fixing base, the armrest fixing base is rotated to disengage the first locking element from the first locking groove.

In one of the embodiments, the first locking element is disposed on the connection fixing base and is capable of reciprocating in a direction of approaching or moving away from the seat fixing base, the first locking groove is provided on the seat fixing base, the armrest fixing base is rotated to enable the first locking element to move away from the seat fixing base to disengage the first locking element from the first locking groove.

In one of the embodiments, the first locking mechanism further includes a driving element, the armrest fixing base is rotated to drive the driving element to push the first locking element away from the seat fixing base to disengage from the first locking groove.

In one of the embodiments, the armrest fixing base has a first inclined surface, one end of the driving element has a second inclined surface matched with the first inclined surface, and the other end of the driving element abuts against the first locking element.

In one of the embodiments, the first locking mechanism further includes a first elastic element, two ends of the first elastic element abut against the first locking element and the connection fixing base, respectively, the first elastic element is configured to enable the first locking element to move toward the first locking groove.

In one of the embodiments, the first locking element is a gear, and the first locking groove is a gear groove matched with the gear.

In one of the embodiments, the baby carrier further includes a second locking mechanism, a first frame fixing base, and a second frame fixing base. The first frame fixing base and the second frame fixing base are pivotally connected to each other, the frame assembly includes a hand support rod and a forefoot support rod, the first frame fixing base and the second frame fixing base are connected to the hand support rod and the forefoot support rod, respectively, the armrest fixing base is rotated to convert the second locking mechanism from a locked state to an unlocked state, when the second locking mechanism is in the locked state, the first frame fixing base and the second frame fixing base are relatively fixed, when the second locking mechanism is in the unlocked state, the first frame fixing base and the second frame fixing base are capable of rotating relative to each other.

In one of the embodiments, the second locking mechanism includes a second locking element, a second locking groove, and a third locking groove, the second locking groove is provided on the first frame fixing base, the third locking groove is provided on the second frame fixing base, the second locking element is engaged with the second locking groove and the third locking groove simultaneous, the armrest fixing base is rotated to drive the second locking element to disengage from one of the second locking groove and the third locking groove to convert the second locking mechanism from the locked state to the unlocked state.

In one of the embodiments, the second locking mechanism further includes a frame unlocking element mounted on the first frame fixing base, the frame unlocking element includes an unlocking body and an unlocking protrusion that are connected to each other, the unlocking body is disposed on a side of the first frame fixing base away from the second frame fixing base, the first frame fixing base is provided with an unlocking hole, the unlocking protrusion extends through the unlocking hole and abuts against the second locking element, the armrest fixing base is rotated to drive the unlocking protrusion to push the second locking element away from the second locking groove.

In one of the embodiments, the first locking mechanism includes a driving element, a first locking element, and a first locking groove matched with the first locking element, the first locking element is disposed on the connection fixing base and is configured to reciprocate in a direction of approaching or moving away from the seat fixing base, the first locking groove is provided on the seat fixing base, the second locking mechanism further includes a pushing element connected to the first locking element, the connection fixing base is provided with a pushing hole, the armrest fixing base rotates to drive the driving element to push the first locking element to move away from the seat fixing base, and enable the pushing element to extend through the pushing hole to push the frame unlocking element.

In one of the embodiments, the armrest fixing base has a first inclined surface, one end of the driving element has a second inclined surface matched with the first inclined surface, the other end of the driving element abuts against the first locking element, the first locking mechanism further includes a first elastic element, two ends of the first elastic element abut against the first locking element and the driving element, respectively, the first elastic element is configured to enable the first locking element to move toward the first locking groove, a side of the pushing element away from the first elastic element has an pushing rib, the pushing rib extends through the connection fixing base and abuts against the frame unlocking element.

In one of the embodiments, the second locking mechanism further includes a second elastic element, two ends of the second elastic element abut against the second locking element and the second frame fixing bases, respectively, the second elastic element is configured to enable the second locking element to move toward the second locking groove.

In one of the embodiments, the connection fixing base and the first frame fixing base are detachably connected.

In one of the embodiments, the connection fixing base is provided with an engaging element, the first frame fixing base is provided with an engaging hole matched with the engaging element.

In one of the embodiments, the connection fixing base further includes a connection unlocking element, the connection unlocking element is driven to enable the engaging element to move away from the first frame fixing base to be disengaged from the engaging hole.

In one of the embodiments, the baby carrier further includes a backrest fixing base and a third locking mechanism, the armrest fixing base, the backrest fixing base, the seat fixing base are coaxially pivoted, when the backrest fixing base rotates relative to the armrest fixing base to a first position, the third locking mechanism locks the armrest fixing base and the seat fixing base, when the backrest fixing base rotates relative to the armrest fixing base to a second position, the third locking mechanism unlocks the armrest fixing base and the seat fixing base.

In one of the embodiments, the third locking mechanism includes a first locking portion provided on the armrest fixing base and a second locking portion provided on the seat fixing base, when the backrest fixing base rotates relative to the armrest fixing base to the first position, the first locking portion is locked with the second locking portion, when the backrest fixing base rotates relative to the armrest fixing base to the second position, the first locking portion and the second locking portion are unlocked.

In one of the embodiments, the first locking portion is an engaging block disposed on the armrest fixing base, the second locking portion is an engaging groove provided on the seat fixing base and matched with the engaging block.

In one of the embodiments, the backrest fixing base is provided with a first though hole, a side of the seat fixing base facing the backrest fixing base is provided with a locking boss, the engaging groove is provided on the locking boss, the engaging block is disposed on a side of the armrest fixing base facing the backrest fixing base, the locking boss extends through the first though hole to enable the engaging block to be engaged in the engaging groove.

In one of the embodiments, the backrest fixing base is provided with a guiding groove, distances between different positions of the guiding groove and an opening of the engaging groove are different, the engaging block includes an engaging portion and a guiding post, the engaging portion is inserted into the engaging groove, the guiding post is slidably received in the guiding groove, when the backrest fixing base rotates relative to the armrest fixing base to the second position, the engaging block moves along the guiding groove to disengage the engaging portion from the engaging groove, when the backrest fixing base rotates relative to the armrest fixing base to the first position, the engaging block moves along the guiding groove to enable the engaging portion to be inserted into the engaging groove.

In one of the embodiments, the third locking mechanism further includes a third elastic element, two ends of the third elastic element abut against the armrest fixing base and the engaging block, respectively, the third elastic element is configured to enable the engaging block to move toward the engaging groove.

In one of the embodiments, the armrest fixing base is provided with a mounting groove extending radially, the engaging block is disposed in the mounting groove, the engaging portion of the engaging block protrudes from an opening of the mounting groove to be engaged in the engaging groove, two ends of the third elastic element abut against the engaging block and a bottom of the mounting groove, respectively.

In one of the embodiments, the engaging block is provided with a mounting platform, the mounting platform includes an abutting portion and a protruding portion that are connected to each other, the third elastic element is sleeved on the protruding portion, and an end of the third elastic element away from the bottom of the mounting groove abuts against the abutting portion.

In one of the embodiments, the baby carrier further includes a backrest fixing base and a fourth locking mechanism configured to lock the armrest fixing base and the seat fixing base, wherein when the backrest fixing base rotates relative to the armrest fixing base to a second position, the fourth locking mechanism is operated to unlock the armrest fixing base and the seat fixing base.

In one of the embodiments, the fourth locking mechanism includes a third locking portion provided on the armrest fixing base and a fourth locking portion provided on the seat fixing base, the third locking portion is operated to be locked or unlocked with the fourth locking portion, or the fourth locking portion is operated to be locked or unlocked with the third locking portion.

In one of the embodiments, the third locking portion is a locking pin movably provided on the armrest fixing base, the fourth locking portion is a fourth locking groove provided on the seat fixing base and matched with the locking pin.

In one of the embodiments, the backrest fixing base is provided with a first though hole, a side of the seat fixing base facing the backrest fixing base is provided with a locking boss, the fourth locking groove is disposed on the locking boss, the locking pin is disposed on a side of the armrest fixing base facing the backrest fixing base, the locking boss extends through the first though hole to lock the locking pin in the fourth locking groove.

In one of the embodiments, the fourth locking mechanism further includes a fourth elastic element, two ends of the fourth elastic element abut against the armrest fixing base and the locking pin, respectively, the fourth elastic element is configured to enable the locking pin to move toward the locking groove.

In one of the embodiments, the armrest fixing base is provided with a mounting channel extending radially therethrough, an end of the locking pin extends through the mounting channel to match with the locking groove, an inner wall of the mounting channel is provided with a limiting post, the locking pin is provided with a limiting hole extending radially, the limiting post is inserted into the limiting hole, and the two ends of the fourth elastic element abut against the limiting post and a side of the limiting hole away from the locking boss, respectively.

In one of the embodiments, the fourth locking mechanism further includes an operating element connected to the locking pin, the operating element is operated to drive the locking pin to move.

In one of the embodiments, the operating element is a webbing.

A seat assembly of a baby carrier, includes an armrest support rod, a backrest support rod, a seat support rod, an armrest fixing base, a backrest fixing base, and a seat fixing base, the armrest support rod is connected to the armrest fixing base, the backrest support rod is connected to the backrest fixing base, the seat support rod is connected to the seat fixing base, the armrest fixing base, the backrest fixing base, and the seat fixing base are coaxially pivoted, the armrest fixing base and the seat fixing base are rotated with a rotation of the backrest fixing base.

In one of the embodiments, the seat assembly further includes a third locking mechanism, wherein when the backrest fixing base rotates relative to the armrest fixing base to a first position, the third locking mechanism locks the armrest fixing base and the seat fixing base, when the backrest fixing base rotates relative to the armrest fixing base to a second position, the third locking mechanism unlocks the armrest fixing base and the seat fixing base.

In one of the embodiments, the third locking mechanism includes a first locking portion provided on the armrest fixing base and a second locking portion provided on the seat fixing base, when the backrest fixing base rotates relative to the armrest fixing base to the first position, the first locking portion is locked with the second locking portion, when the backrest fixing base rotates relative to the armrest fixing base to the second position, the first locking portion and the second locking portion are unlocked.

In one of the embodiments, the first locking portion is an engaging block disposed on the armrest fixing base, and the second locking portion is an engaging groove provided on the seat fixing base and matched with the engaging block.

In one of the embodiments, the seat assembly further includes a connection fixing base, wherein the connection fixing base is provided with a mounting shaft, the seat fixing base, the backrest fixing base, and the armrest fixing base are coaxially and pivotally sleeved on the mounting shaft.

In one of the embodiments, the seat assembly further includes a fifth locking mechanism, wherein when the fifth locking mechanism is in a locked state, the backrest fixing base and the armrest fixing base are relatively locked, when the fifth locking mechanism is in an unlocked state, the backrest fixing base and the armrest fixing base are capable of rotating relative to each other.

These and other objects, advantages, purposes and features will become apparent upon review of the following specification in conjunction with the drawings.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a perspective view of a baby carrier according to an embodiment of the present disclosure.
FIG. 2 is a perspective view of the baby carrier shown in FIG. 1 after removing a seat assembly.
FIG. 3 is an exploded view of FIG. 2.
FIG. 4 is a perspective view of the baby carrier shown in FIG. 1 after removing a frame assembly.
FIG. 5 is a perspective view of FIG. 4 viewed from another aspect.
FIG. 6 is a perspective view of FIG. 4 viewed from another aspect.
FIG. 7 is a partial exploded view of FIG. 4.
FIG. 8A is an enlarged view of portion A in FIG. 7.
FIG. 8B is a perspective view of an engaging block in FIG. 8A.
FIG. 8C is a perspective view of the engaging block shown in FIG. 8B viewed from another aspect.
FIG. 9 is a partial exploded view of the baby carrier shown in FIG. 4 in another state.
FIG. 10 is an enlarged view of portion B in FIG. 9.
FIG. 11A is a side view of FIG. 9.
FIG. 11B is a cross-sectional view of FIG. 4.
FIG. 11C is an enlarged view of portion H in FIG. 11B.
FIG. 11D is a cross-sectional view of FIG. 4 in another state.
FIG. 11E is an enlarged view of portion I in FIG. 11D.
FIG. 11F is a cross-sectional view of FIG. 4 in another state.
FIG. 11G is an enlarged view of portion J in FIG. 11F.
FIG. 12 is another partial exploded view of the baby carrier shown in FIG. 9.
FIG. 13 is an enlarged view of portion C in FIG. 12.
FIG. 14 is a partial exploded view of FIG. 4.
FIG. 15 is an enlarged view of portion D in FIG. 14.
FIG. 16A is an exploded view of FIG. 6.
FIG. 16B is an enlarged view of portion G in FIG. 16A.
FIG. 17A is an exploded view of FIG. 6 viewed from another aspect.
FIG. 17B is an enlarged view of portion K in FIG. 17A.
FIG. 18A is a perspective view of an armrest fixing base in FIG. 17B.
FIG. 18B is a perspective view of a backrest fixed seat in FIG. 16B.
FIG. 18C is a perspective view of a seat fixing base in FIG. 16B.
FIG. 19 is a perspective view of a connection fixing base and a first locking element in FIG. 16B.
FIG. 20 is a perspective view of the connection fixing base in FIG. 17B from another aspect.
FIG. 21 is a side view of the baby carrier shown in FIG. 1 in an unfolded state.
FIG. 22 is a side view of a part of the baby carrier shown in FIG. 1 in a folded state.
FIG. 23 is a side view of the baby carrier shown in FIG. 1 in a folded state.

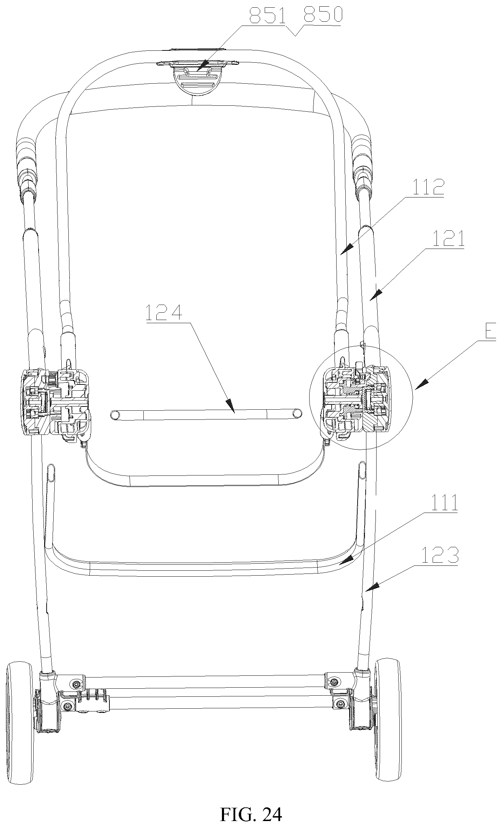

FIG. 24 is a partial cross-sectional view taken along line M-M in FIG. 21.
FIG. 25 is an enlarged view of portion E in FIG. 24.
FIG. 26 is a side view of the baby carrier shown in FIG. 21 after removing the seat assembly.
FIG. 27 is a partial cross-sectional view taken along line N-N in FIG. 26.
FIG. 28 is an enlarged view of portion F in FIG. 27.

### DETAILED DESCRIPTION OF THE EMBODIMENTS

Embodiments of the invention are described more fully hereinafter with reference to the accompanying drawings. The various embodiments of the invention may, however, be embodied in many different forms and should not be construed as limited to the embodiments set forth herein. Rather, these embodiments are provided so that this disclosure will be thorough and complete, and will fully convey the scope of the invention to those skilled in the art. Elements that are identified using the same or similar reference characters refer to the same or similar elements.

It will be understood that when an element is referred to as being "fixed" or connected" to another element, it can be directly connected or coupled to the other element or intervening elements may be present. In contrast, if an element is referred to as being "directly connected" or "directly coupled" to another element, there are no intervening elements present. The terms "vertical", "horizontal", "left", "right" and similar expressions used herein are for the purpose of illustration only and do not represent the only embodiment.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein. The term "and/or" includes any and all combinations of one or more of the associated listed items.

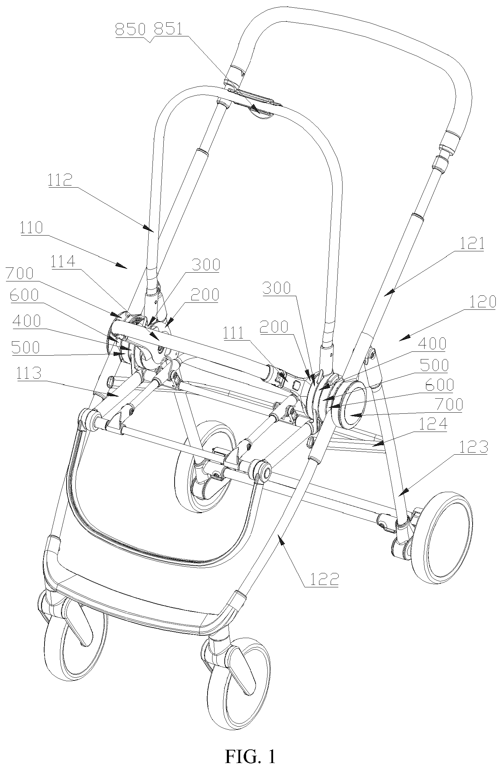

As shown in FIG. 1, according to an embodiment, a baby carrier, such as a stroller, is provided. A folding process of a seat assembly of the baby carrier relative to a frame assembly of the baby carrier can be well controlled, the baby carrier is convenient to use and has a higher safety.

As shown in FIG. 1, FIG. 3, FIG. 8A, and FIG. 13, the baby carrier includes a seat assembly 110, a frame assembly 120, an armrest fixing base 200, a backrest fixing base 300, a seat fixing base 400, a connection fixing base 500, a first frame fixing base 600, a second frame fixing base 700, a first locking mechanism 810, a second locking mechanism 820, a third locking mechanism 840, a fourth locking mechanism 830, and a fifth locking mechanism 850.

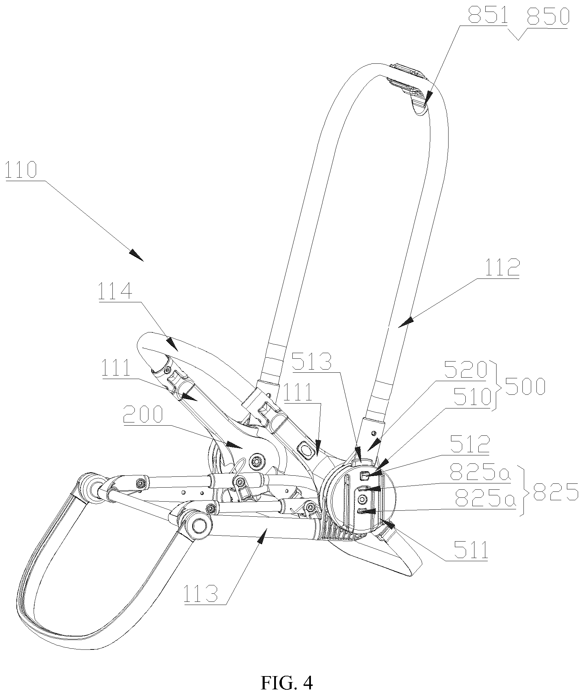

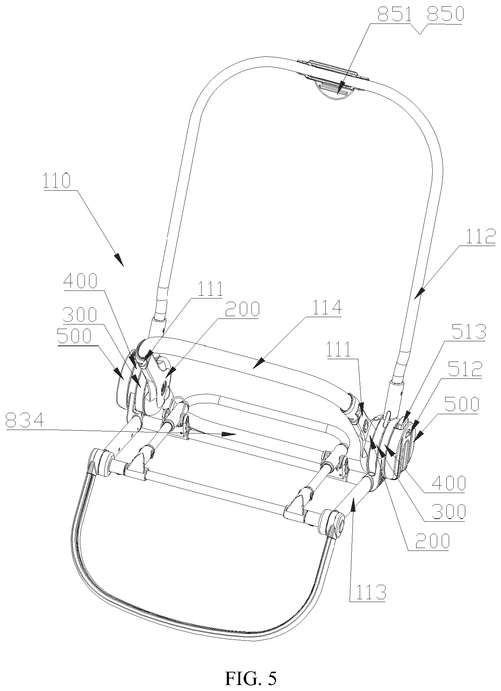

As shown in FIGS. 4 to 6, the seat assembly 110 includes an armrest support rod 111, a backrest support rod 112, a seat support rod 113, and an armrest cross rod 114. The armrest cross rod 114 is laterally disposed in front of the connection fixing base 500 for a baby to grasp. Two ends of the armrest cross rod 114 are connected to the armrest support rod 111. The backrest support rod 112 and a backrest fabric (not shown) wrapped around the backrest support rod 112 form a backrest configured to support the baby's back. The seat support rod 113 and a seat fabric (not shown) wrapped around the seat support rod 113 form a seat configured to support the baby's buttocks.

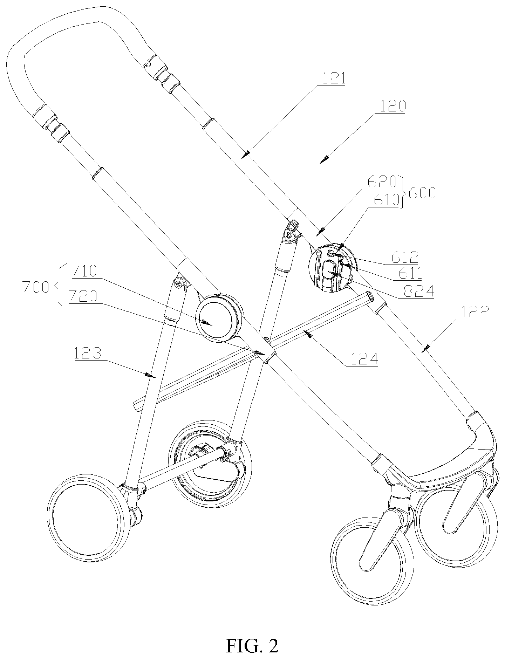

As shown in FIGS. 2 to 3, the frame assembly 120 includes a hand support rod 121, a forefoot support rod 122, a rear foot support rod 123 and a U-shaped link rod 124. The seat assembly 110 and the frame assembly 120 are detachably connected.

As shown in FIG. 1, FIG. 16A, and FIG. 17A, the armrest fixing base 200, the backrest fixing base 300, the seat fixing base 400, and the connection fixing base 500 are pivoted coaxially in sequence.

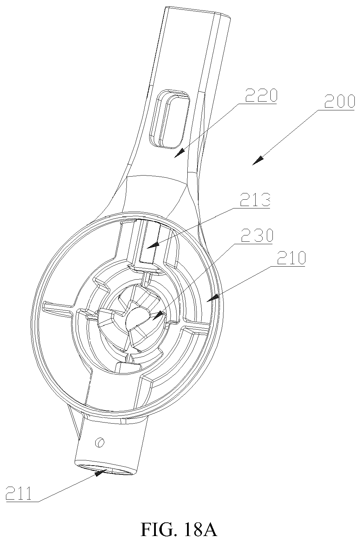

As shown in FIG. 18A, the armrest fixing base 200 includes a first main body portion 210 and a first connecting portion 220 that are connected to each other. The first main body portion 210 is substantially in a shape of a disc. The first connecting portion 220 is substantially in the shape of a tube, and can be sleeved and fixed on the armrest support rod 111.

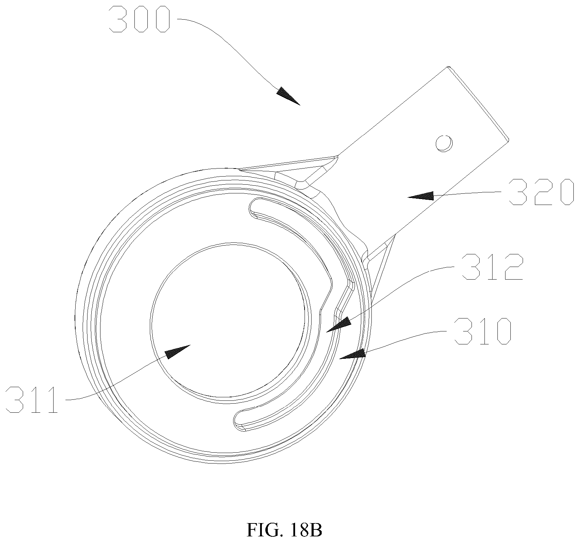

As shown in FIG. 18B, the backrest fixing base 300 includes a second main body portion 310 and a second connecting portion 320 that are connected to each other. The second main body portion 310 is substantially annular, a middle of the second main body portion 310 is provided with a substantially circular first though hole 311. The second connecting portion 320 is substantially in a shape of a tube, and is configured to be sleeved and fixed on the backrest support rod 112.

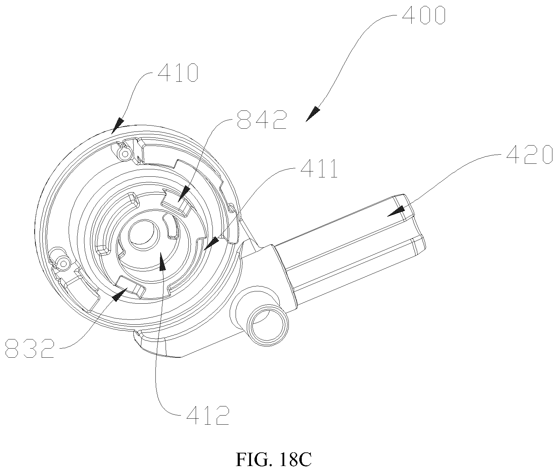

As shown in FIG. 18C, the seat fixing base 400 includes a third main body portion 410 and a third connecting portion 420 that are connected to each other. The third main body portion 410 is substantially in a shape of a truncated cone, a side of the third main body portion 410 away from the fixing base 300 is provided with a locking boss 411. A middle portion of the locking boss 411 is provided with a substantially circular second though hole 412 opposite to the first though hole 311. The third connecting portion 420 is substantially in a shape of a sleeve, and is configured to be sleeved and fixed on the seat support rod 113.

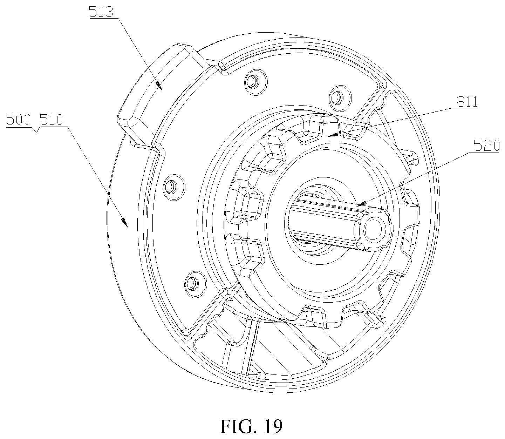

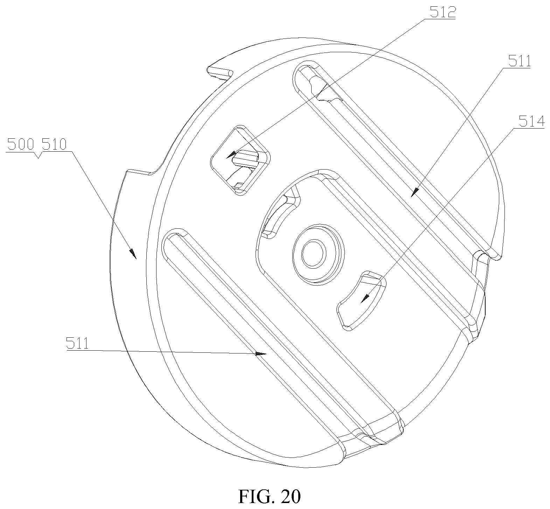

Referring to FIG. 19 and FIG. 20, the connection fixing base 500 is fixed to the frame assembly 120. The connection fixing base 500 includes a fourth main body portion 510 in a substantially disc shape and a mounting shaft 520 fixed to a middle of the fourth main body portion 510. The seat fixing base 400, the backrest fixing base 300, and the armrest fixing base 200 are sequentially sleeved on the mounting shaft 520 to achieve a coaxial pivot connection.

In this embodiment, the first connecting portion 220, the second connecting portion 320 and the third connecting portion 420 are sleeved and connected on the armrest support rod 111, the backrest support rod 112, and the seat support rod 113, respectively. For example, the first connecting portion 220, the second connecting portion 320, and the third connecting portion 420 can be detachably connected to the armrest support rod 111, the backrest support rod 112, and the seat support rod 113, respectively through pins. In another embodiment, the first connecting portion 220, the second connecting portion 320, and the third connecting portion 420 are integrally formed with the armrest support rod 111, the backrest support rod 112, and the seat support rod 113, respectively.

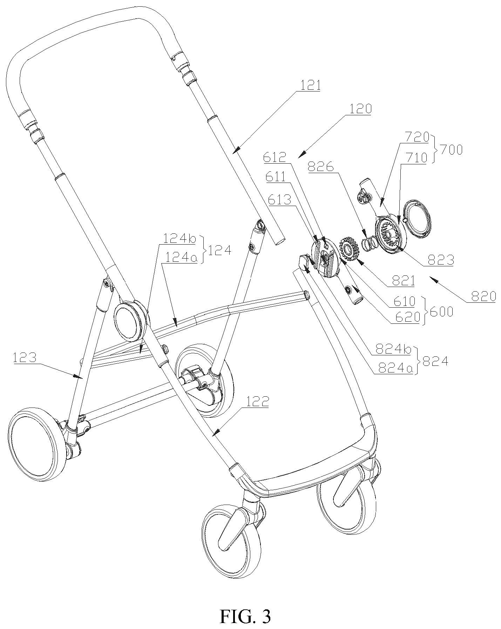

Further, as shown in FIG. 3, the U-shaped link rod 124 includes a link lateral rod 124a and two link side rods 124b connected to two ends of the link lateral rod 124a. Each side of the seat assembly 110 is provided with the hand support rod 121, the forefoot support rod 122, and the rear foot support rod 123. The hand support rod 121 and the forefoot support rod 122 on the same side of the seat assembly 110 are pivotally connected to each other. The rear foot support rod 123 is also pivotally connected to the hand support rod 121. The rear foot support rod 123 and the forefoot support rod 122 are connected though one of the link side rods 124b to achieve an interconnected folding of the rear foot support rod 123 and the forefoot support rod 122.

Further, as shown in FIGS. 1 to 3, the first frame fixing base 600 and the second frame fixing base 700 are pivotally connected to each other, while the first frame fixing base 600 and the connection fixing base 500 are detachably connected. The first frame fixing base 600 includes a fifth main body portion 610 and a fifth connecting portion 620 that are connected to each other. The fifth main body portion 610 is substantially in a shape of a disc, the fifth connecting portion 620 is substantially in a shape of a tube. The second frame fixing base 700 includes a sixth main body portion 710 and a sixth connecting portion 720 that are connected to each other. The sixth main body portion 710 is substantially in a shape of a disc, and the sixth connecting portion 720 is substantially in a shape of a tube. Referring to FIG. 3, a side of the fifth main body portion 610 has a connecting rib 611. As shown in FIG. 20, a side of the connection fixing base 500 away from the seat fixing base 400, that is, a side of the fourth main body portion 510 away from the third main body portion 410, is provided with a connecting groove 511 matched with the connecting rib 611. A side of the fifth main body portion 610 is provided with an engaging hole 612. The side of the connection fixing base 500 away from the seat fixing base 400, that is, a side of the fourth main body portion 510 away from the third main body portion 410, is provided with an engaging element 512 configured to be matched with the engaging hole 612. As shown in FIG. 19, the connection fixing base 500 further has a connection unlocking element 513. The connection unlocking element 513 can be pressed to enable the engaging element 512 to move away from the first frame fixing base 600 to be disengaged from the engaging hole 612. In this way, the first frame fixing base 600 is detachably connected to the connection fixing base 500. It should be understood that positions of the connecting rib 611 and the connecting groove 511 can be interchanged, positions of the engaging hole 612 and the engaging element 512 can also be interchanged. In this embodiment, the first frame fixing base 600 and the second frame fixing base 700 are respectively sleeved and connected on the forefoot support rod 122 and the hand support rod 121 through the fifth connecting portion 620 and the sixth connecting portion 720. In other embodiments, the first frame fixing base 600 and the second frame fixing base 700 may also be connected to the hand support rod 121 and the forefoot support rod 122, respectively, or formed integrally with the hand support rod 121 and the forefoot support rod 122, respectively. It should be understood that, in other embodiments, the first frame fixing base 600 and the second frame fixing base 700 may also be sleeved and connected on the hand support rod 121 and the forefoot support rod 122, respectively.

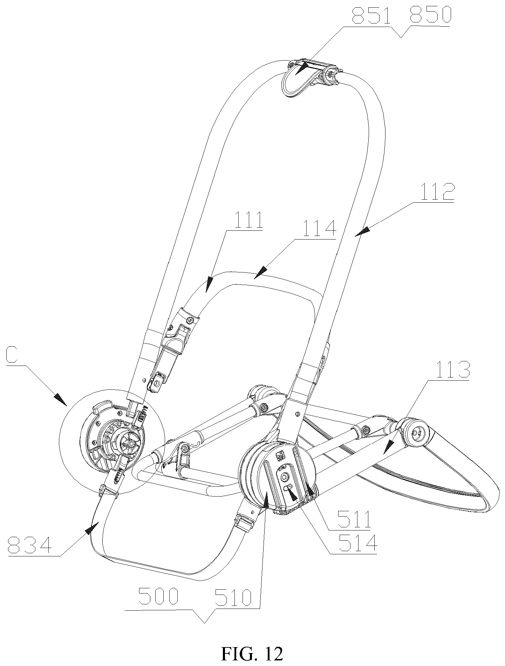

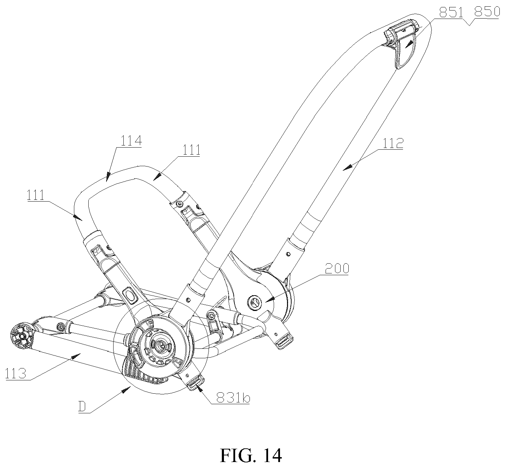

As shown in FIG. 12 to FIG. 15, the first locking mechanism 810 has a locked state and an unlocked state. When the armrest fixing base 200 is rotated, the first locking mechanism 810 can be converted from the locked state to the unlocked state. When the first locking mechanism 810 is in the locked state, the seat fixing base 400 and the connection fixing base 500 are relatively fixed. When the first locking mechanism 810 is in the unlocking state, the seat fixing base 400 and the connection fixing base 500 can rotate relative to each other. In this way, when folding the baby carrier, the armrest fixing base 200 can be rotated, so that the first locking mechanism 810 can be converted from the locked state to the unlocked state, that is, the seat assembly 110 and the frame assembly 120 can be unlocked. The seat assembly 110 can be rotated and folded, so that an overall volume of the baby carrier after being folded is reduced. The seat assembly 110 is folded by rotating the armrest support rod 111 and the armrest fixing base 200, thus a folding process can be well controlled, it is convenient to use, and has a higher safety.

Specifically, as shown in FIGS. 12 to 15, the first locking mechanism 810 includes a first locking element 811 and a first locking groove 812 that is matched with the first locking element 811. The first locking element 811 is disposed on the connection fixing base 500. Specifically, the first locking element 811 is sleeved on the mounting shaft 520, and it can only reciprocate adjacent to or away from the seat fixing base 400. In other words, the first locking element 811 can only reciprocate along an axial direction of the mounting shaft 520, while it cannot rotate with respect to the mounting shaft 520. The first locking groove 812 is provided on the side of the seat fixing base 400 facing the connection fixing base 500. In this embodiment, the first locking member 811 is a gear, the first locking groove 812 is a gear groove that can be matched with the gear. It should be understood that, in other embodiments, the first locking member 811 and the first locking groove 812 may also have other shapes. Rotating the armrest fixing base 200 can disengage the first locking member 811 from the first locking groove 812. In this way, the connection fixing base 500 and the seat fixing base 400 can be unlocked by rotating the armrest fixing base 200, it has simple structure and is easy to use.

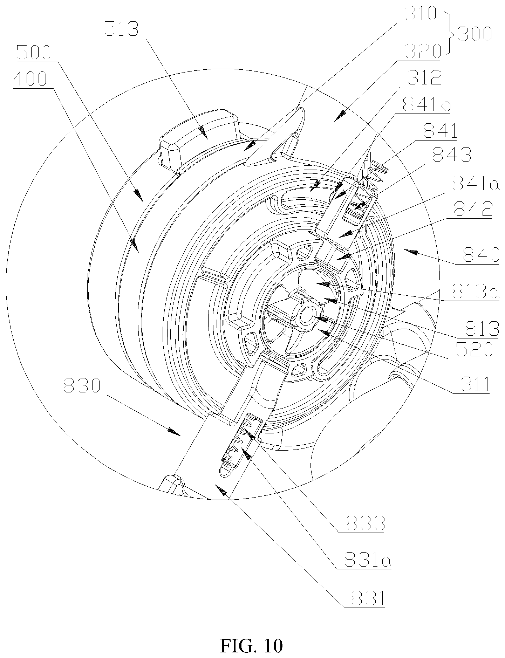

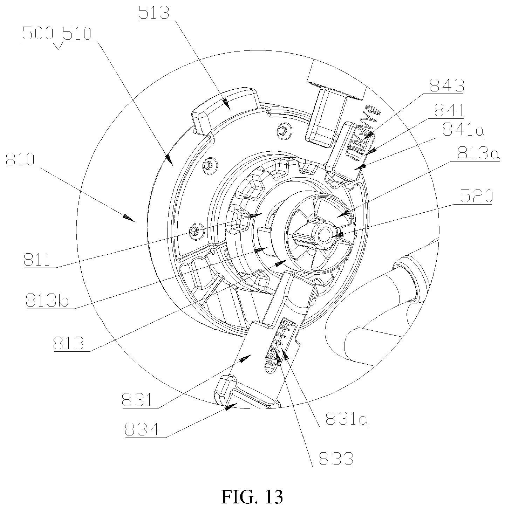

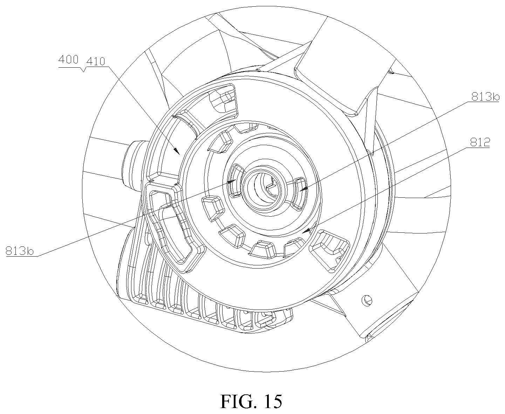

Further, as shown in FIG. 13, the first locking mechanism 810 further includes a driving element 813. The driving element 813 is sleeved on the mounting shaft 520. Referring to FIG. 10, FIG. 17A, FIG. 17B, FIG. 18B, and FIG. 18C, specifically, the driving element 813 may be disposed in the accommodating space formed by the first though hole 311 and the second though hole 412. Rotating the armrest fixing base 200 can enable the driving element 813 to push the first locking element 811 to move away from the seat fixing base 400, so as to be disengaged from the first locking groove 812. Referring to FIG. 18A, the armrest fixing base 200 is provided with a first inclined surface 230. The driving element 813 is substantially cylindrical, one end of the driving element 813 is provided with a second inclined surface 813a that can cooperate with the first inclined surface 230, and the other end of the driving element 813 abuts against the first locking element 811. As shown in FIGS. 13 and 15, the other end of the driving element 813 is provided with a driving protrusion 813b, the driving protrusion 813b can extend through the third main body portion 410 and abut against the first locking element 811. In this way, when the armrest fixing base 200 is rotated, the first inclined surface 230 rotates and pushes against the second inclined surface 813a to move axially, such that the driving element 813 is pushed to move axially. The driving element 813 then pushes the first locking element 811 to disengage the first locking element 811 from the first locking groove 812, so that the seat fixing base 400 and the connection fixing base 500 are unlocked.

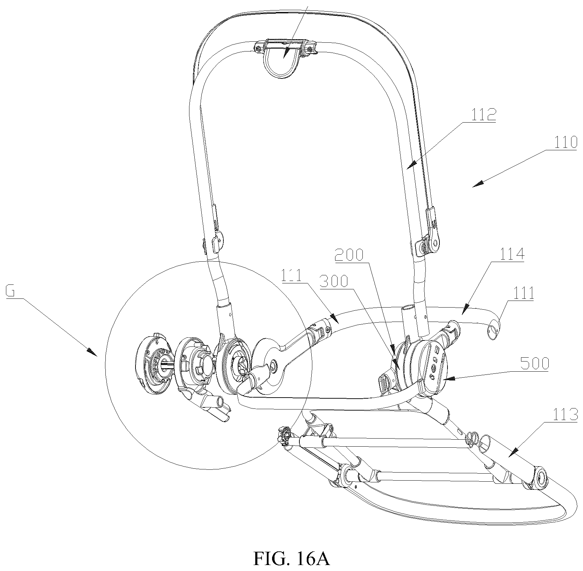

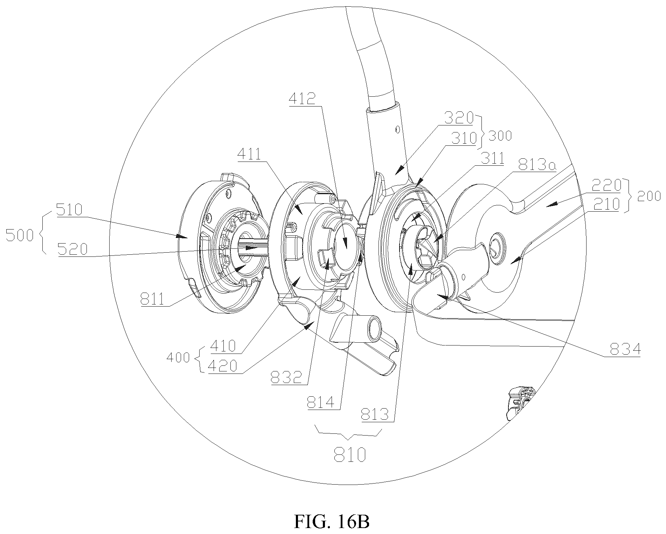

Further, as shown in FIGS. 16A to 17B, the first locking mechanism 810 further includes a first elastic element 814. Two ends of the first elastic element 814 abut against the first locking element 811 and the driving element 813, respectively. The first elastic element 814 enables the first locking element 811 to move toward the first locking groove 812 (i.e., the seat fixing base 400). In this embodiment, the first elastic element 814 may be a spring or an elastic rubber post sleeved on the mounting shaft 520, which is not limited thereto. In this way, after the state of the baby carrier is converted, for example, when the baby carrier is converted from the folded state to the unfolded state for use, the first elastic element 814 can automatically drive the first locking member 811 back into the first locking groove 812, therefore the seat fixing base 400 and the connection fixing base 500 are automatically locked again, which is convenient to use.

As shown in FIG. 1 to FIG. 3, the second locking mechanism 820 has a locked state and an unlocked state, and the second locking mechanism 820 can be converted from the locked state to the unlocked state by rotating the armrest fixing base 200. When the second locking mechanism 820 is in the locked state, the first frame fixing base 600 and the second frame fixing base 700 are relatively fixed. When the second locking mechanism 820 is in the unlocking state, the first frame fixing base 600 and the second frame fixing base 600 can rotate relative to each other.

Specifically, as shown in FIGS. 1 to 3, the second locking mechanism 820 includes a second locking element 821, a second locking groove (not shown), and a third locking groove 823. The second locking groove is provided on the first frame fixing base 600, the third locking groove 823 is provided on the second frame fixing base 700. The second locking element 821 can be engaged with the second locking groove and the third locking groove 823 simultaneous. Rotating the armrest fixing base 200 can drive the second locking element 821 to be disengaged from one of the second locking groove and the third locking groove 823, so that the second locking mechanism 820 is converted from the locked state to the unlocked state. In this embodiment, the second locking element 821 is a gear, and both the second locking groove and the third locking groove 823 are gear grooves matched with the second locking element 821. It should be understood that, in other embodiments, the second locking element 821 may also be in other shapes, such as an irregular polygon, etc., and the second locking groove and the third locking groove 823 may be correspondingly other corresponding shapes.

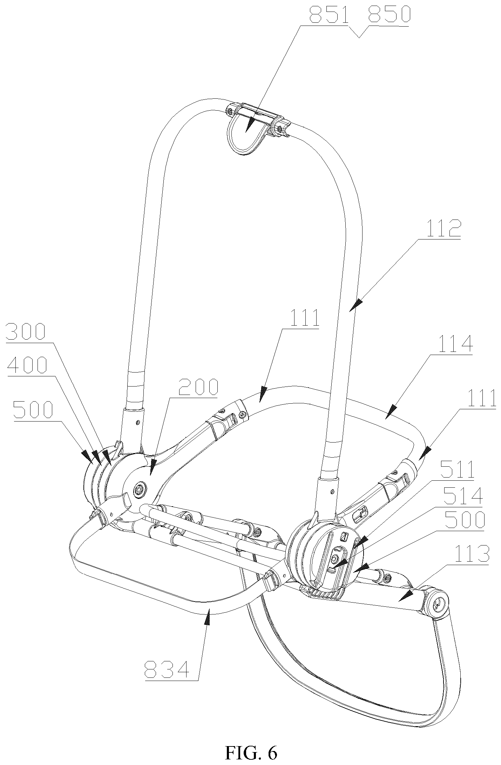

Further, as shown in FIGS. 3 and 4, the second locking mechanism 820 further includes a frame unlocking element 824 and a pushing element 825. The frame unlocking element 824 is mounted on the first frame fixing base 600. Specifically, the frame unlocking element 824 may include an unlocking body 824a and an unlocking protrusion 824b that are connected to each other. The unlocking body 824a is disposed on the side of the first frame fixing base 600 away from the second frame fixing base 700. The first frame fixing base 600 is provided with an unlocking hole 613, the unlocking protrusion 824b extends through the unlocking hole 613 to abut against the second locking element 821. The pushing element 825 is fixed to the first locking element 811. For example, the pushing element 825 may be integrally formed with the first locking element 811. Specifically, the pushing element 825 may include two pushing ribs 825a arranged at intervals on a side of the first locking element 811 away from the seat fixing base 400. The side of the connection fixing base 500 away from the seat fixing base 400 is opposite to the side of the first frame fixing base 600 provided with the frame unlocking element 824. The connecting base 500 is provided with a pushing hole 514 (as shown in FIG. 6 and FIG. 20) for the pushing element 825 to extend through. Rotating the armrest fixing base 200 can drive the first locking element 811 to move axially, so that the pushing element 825 can push the frame unlocking element 824 through the pushing hole 514, and the unlocking protrusion 824b of the frame unlocking element 824 can push the second locking member 821 to be disengaged from the second locking groove, the second locking mechanism 820 is then converted from the locked state to the unlocked state. At the same time, the pushing element 825 fixed to the first locking element 811 extends into the pushing hole 514, such that the first locking element 811 can also be limited to move only in a direction of approaching or moving away from the seat fixing base 400, that is, only moving in the axial direction, so as to prevent the first locking member 811 from rotating with respect to the mounting shaft 520, thereby achieving a locking function of the second locking mechanism 820.

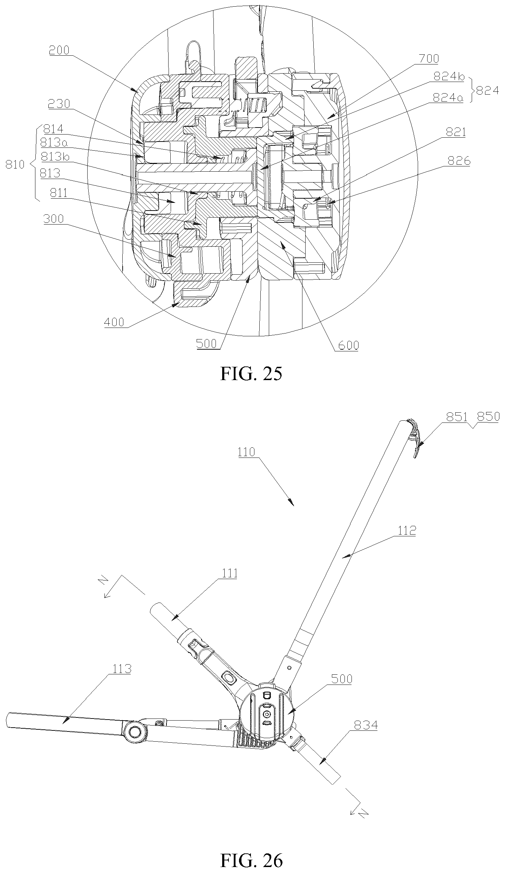

Further, as shown in FIGS. 3 and 25, the second locking mechanism 820 further includes a second elastic element 826. Two ends of the second elastic member 826 abut against the second locking member 821 and the sixth main body portion 710 of the second frame fixing base 700, respectively. The second elastic element 826 can enable the second locking element 821 to move toward the second locking groove of the first frame fixing base 600. In this embodiment, the second elastic element 826 may be a spring or an elastic rubber post sleeved on the mounting shaft 520, which is not limited thereto. In this way, after the state of the baby carrier is converted, for example, when the baby carrier is converted from the folded state to the unfolded state for use, the second elastic element 826 can automatically drive the second locking element 821 back to the second locking groove, therefore the first frame fixing base 600 and the second frame fixing base 700 are automatically locked again, which is convenient to use.

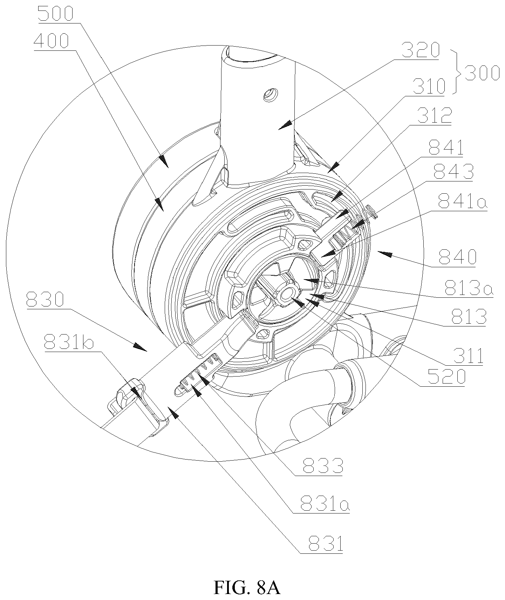

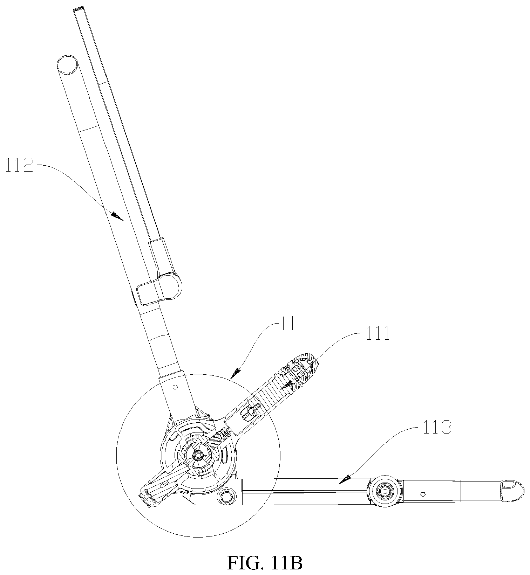

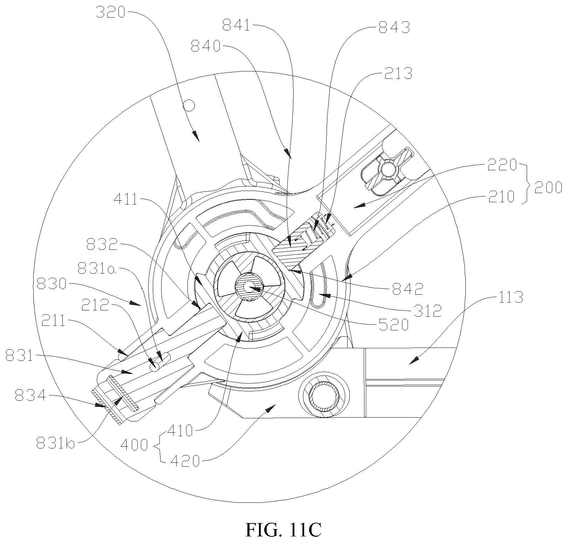

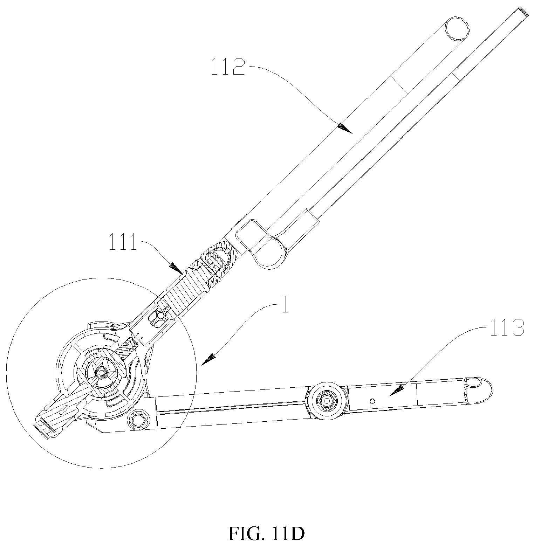

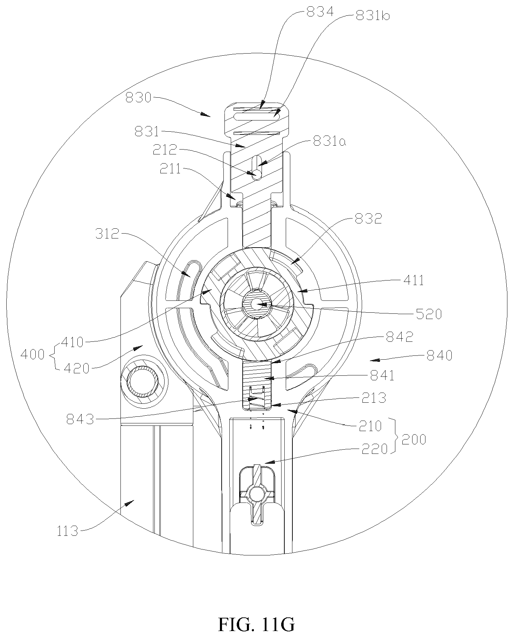

Further, as shown in FIG. 8A, the third locking mechanism 840 has a locked state and an unlocked state. When the backrest fixing base 300 rotates relative to the armrest fixing base 200 to a first position (as shown in FIGS. 11B and 11C), the third locking mechanism 840 can lock the armrest fixing base 200 and the seat fixing base 400. When the backrest fixing base 300 rotates relative to the armrest fixing base 200 to a second position (as shown in FIGS. 11D to 11G), the third locking mechanism 840 can unlock the armrest fixing base 200 from the seat fixing base 400.

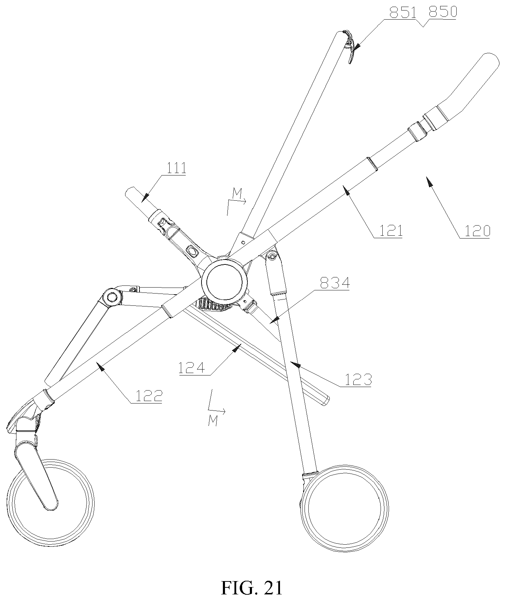

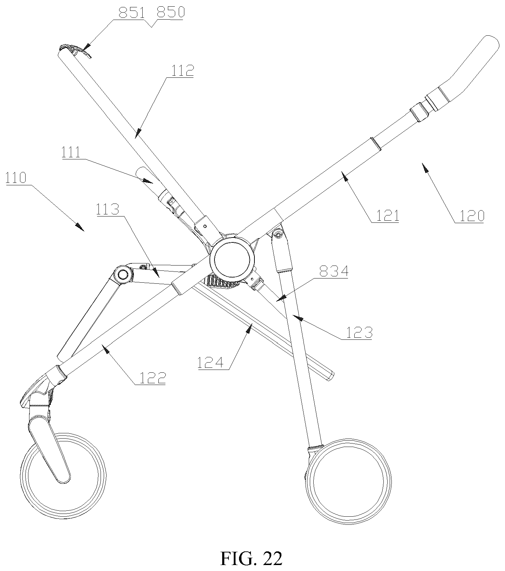

In this embodiment, as shown in FIG. 22, the second position may be a position where the backrest fixing base 300 rotates relative to the armrest fixing base 200 to enable the armrest support rod 111 to be substantially parallel or coincident with the backrest support rod 112. As shown in FIG. 21, the first position may be a position other than the second position. In this way, when folding the baby carrier, the backrest fixing base 300 can be rotated relative to the armrest fixing base 200 from the first position to the second position, at this time, the armrest support rod 111 and the backrest support rod 112 are substantially parallel or coincident, while the third locking mechanism 840 unlocks the armrest fixing base 200 and the seat fixing base 400. The backrest fixing base 300 can then be further operated to enable the armrest support rod 110, the back support rod 120, and the seat support rod 130 to be folded to a state in which they are substantially parallel, so as to reduce the storage space after the seat assembly 110 is folded.

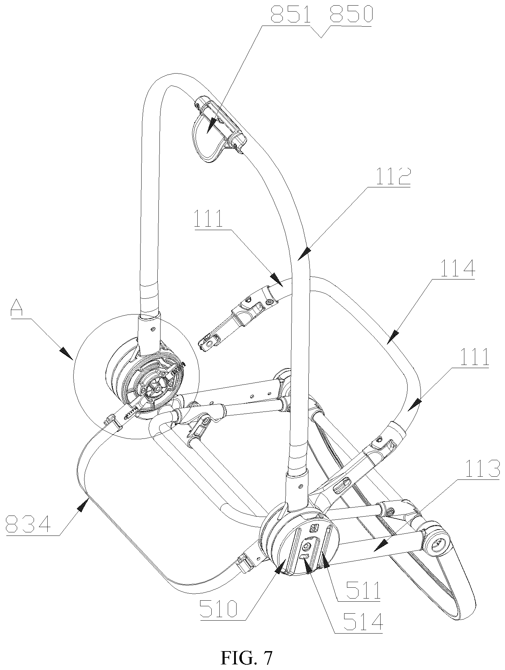

Specifically, as shown in FIGS. 7 to 10, 17A, and 17B, the third locking mechanism 840 includes a first locking portion provided on the armrest fixing base 200 and a second locking portion provided on the seat fixing base 400. When the backrest fixing base 300 rotates relative to the armrest fixing base 200 to the first position, the first locking portion is engaged with and the second locking portion. When the backrest fixing base 300 rotates relative to the armrest fixing base 200 to the second position, the first locking portion is disengaged from the second locking portion. In this embodiment, the first locking portion is an engaging block 841 disposed on the armrest fixing base 200, and the second locking portion is an engaging groove 842 that is provided on the seat fixing base 400 and matched with the engaging block 841.

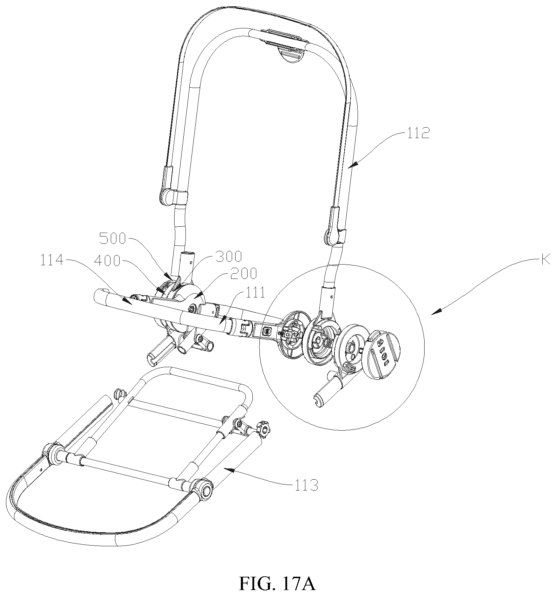

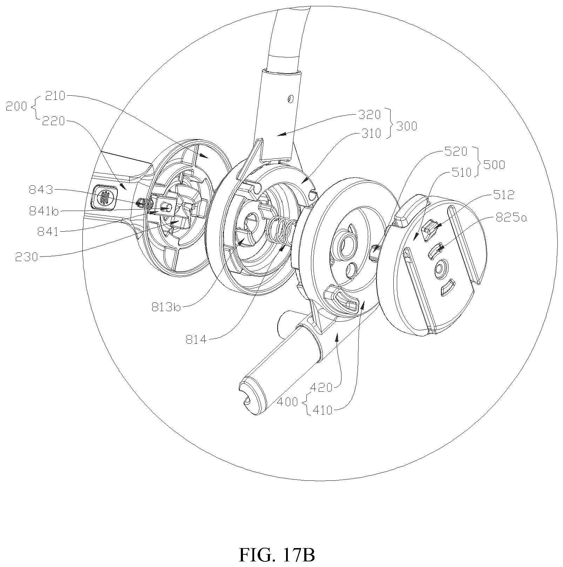

Optionally, as shown in FIG. 10, FIG. 17A, and FIG. 17B, the engaging groove 842 is provided on the locking boss 411, and the engaging block 841 is disposed on the side of the armrest fixing base 200 facing the backrest fixing base 300. Referring to FIG. 18A, the first main body portion 210 of the armrest fixing base 200 is provided with a mounting groove 213 extending radially, the engaging block 841 is disposed in the mounting groove 213, and the engaging block 841 protrudes from an opening of the mounting groove 213 to be engaged in the engaging groove 842. The locking boss 411 extends through the first though hole 311 to lock the engaging block 841 in the engaging groove 842. Optionally, the mounting groove 213 and a mounting channel 211 are arranged along a same radial direction of the armrest fixing base 200, that is, the engaging block 841 and the locking pin 831 are arranged along a same radial direction of the armrest fixing base 200. In this way, the engaging block 841 and the locking pin 831 can lock the seat fixing base 400 from both opposite sides of the armrest fixing base 200. It should be understood that positions of the engaging block 841 and the engaging groove 842 can also be interchanged, or the third locking mechanism 840 can also be configured into other structures, such as a hook and a hole that cooperate with each other, which is not limited thereto.

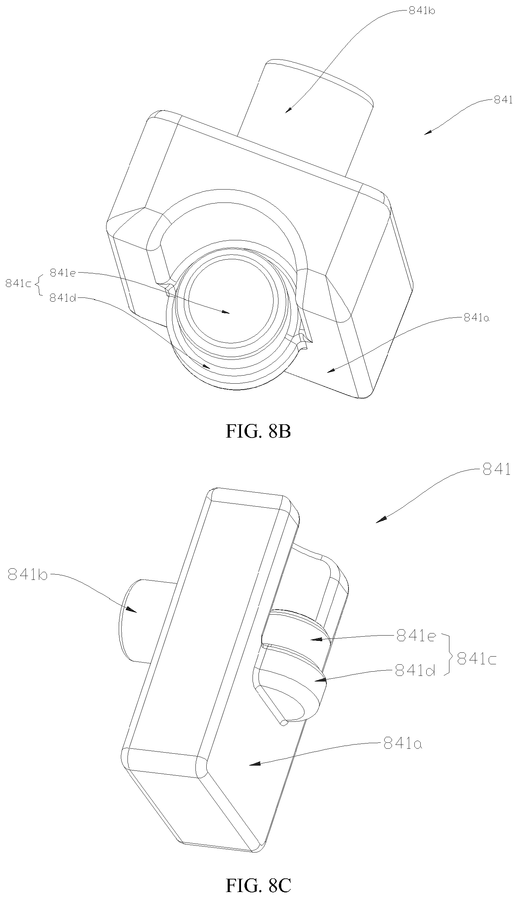

Further, as shown in FIG. 7 to FIG. 10 and FIG. 18B, the second main body portion 310 of the backrest fixing base 300 is provided with a guiding groove 312. Distances between different positions of the guiding groove 312 and an opening of the engaging groove 842 are different, that is, an extending path of the guide groove 312 is varied. As shown in FIGS. 8B and 8C, the engaging block 841 includes an engaging portion 841a and a guiding post 841b. The engaging portion 841a can be inserted into the engaging groove 842, the guiding post 841b is slidably received in the guide groove 312. When the backrest fixing base 300 rotates relative to the armrest fixing base 200 to the second position, the guiding groove 312 is positioned farthest from a center of the second main body 310, that is, a distance between the guiding groove 312 and the locking boss 411 is the farthest, and the guiding post 841b moves along the guiding groove 312 until the engaging portion 841a is disengaged from the engaging groove 842. When the backrest fixing base 300 rotates relative to the armrest fixing base 200 to the first position, the guiding post 841b moves along the guiding groove 312 until the engaging portion 841a is inserted into the engaging groove 842. In this way, on the one hand, when the backrest fixing base 300 rotates relative to the armrest fixing base 200 to the first position, the third locking mechanism 840 is in the locked state, and when the backrest fixing base 300 rotates relative to the armrest fixing base 200 to the second position, the third locking mechanism 840 is in the unlocked state. On the other hand, during unfolding the baby carrier, due to a cooperation between the guiding post 841b of the engaging block 841 and the guiding groove 312, the armrest fixing base 200 interacts with the backrest fixing base 300 when the backrest fixing base 300 is rotated, so that the armrest support rod 111 is simultaneously unfolded when the backrest support rod 112 and the entire baby carrier is unfolded, and the armrest support rod 111 can automatically return to the initial position during the unfolding process. In this way, during folding the baby carrier, the backrest fixing base 300 can drive the armrest fixing base 200 to continue to rotate relative to the seat fixing base 400 in an original direction until the folding process is completed.

Further, as shown in FIG. 8A, FIG. 10 and FIG. 28, the third locking mechanism 840 further includes a third elastic element 843. Two ends of the third elastic element 843 abut against the armrest fixing base 200 and the engaging block 841, respectively. Specifically, two ends of the third elastic member 843 abut against a bottom of the mounting groove 213 and the engaging block 841, respectively, so that the engaging block 841 always has a tendency to move in a direction adjacent to the engaging groove 842. In this way, after the baby carrier is converted from the folded state to the unfolded state, the backrest fixing base 300 is rotated relative to the armrest fixing base 200 to the first position, the engaging block 841 can be automatically engaged in the engaging groove 842 under an action of the third elastic member 843 to lock the armrest fixing base 200 and the seat fixing base 400, so as to improve the safety performance.

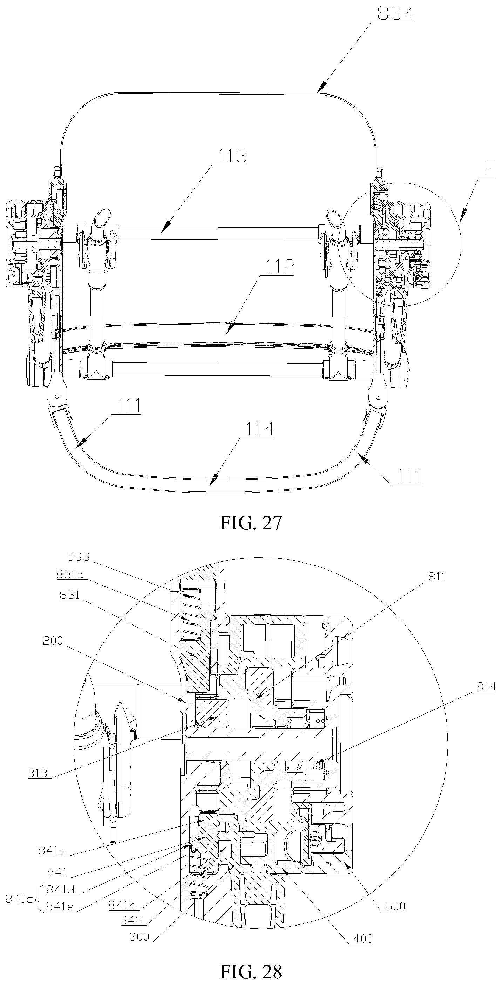

Specifically, as shown in FIG. 8B, FIG. 8C and FIG. 28, the engaging block 841 is provided with a mounting platform 841c. The mounting platform 841c includes an abutting portion 841d and a protruding portion 841e that are connected to each other. One end of the third elastic element 843 is sleeved on the protruding portion 841e, and the other end of the third elastic element 843 away from the mounting groove 213 abuts against the abutting portion 841d. In this embodiment, the third elastic element 843 may be a spring, and it should be understood that, the third elastic element 843 may also be an elastic rubber column, etc., which is not limited hereto.

Further, as shown in FIGS. 7 to 10, the fourth locking mechanism 830 can implement a relative locking of the armrest fixing base 200 and the seat fixing base 400. When the backrest fixing base 300 is rotated relative to the armrest fixing base 200 to the second position, the fourth locking mechanism 830 can be operated, so that the armrest fixing base 200 and the seat fixing base 400 can rotate relative to each other. In this way, when the fourth locking mechanism 830 is operated, the armrest fixing base 200 and the seat fixing base 400 are unlocked, the armrest fixing base 200 can rotate relative to the seat fixing base 400, and finally the armrest support rod 111, the seat support rod 113 and the backrest support rod 112 are arranged substantially parallel to each other, so as to prevent the armrest support rod 111 from tilting or protruding outwards. In this way, the volume of the folded baby carrier can be greatly reduced. On the one hand, a transportation cost is reduced, on the other hand, it is convenient for the user to store and place, save an occupied space, and improve the user's experience. Due to an ingenious cooperation of the fourth locking mechanism 830 and the third locking mechanism 840, a safety function of double locking is provided for the baby carrier. When only the fourth locking mechanism 830 is operated or the backrest fixing base 300 is rotated relative to the armrest fixing base 200 to the second position so that the third locking mechanism 840 is in the unlocking state, the baby carrier cannot be unlocked. Only when the fourth locking mechanism 830 and the third locking mechanism 840 are unlocked simultaneously, the armrest support rod 111, the backrest support rod 112 ,and the seat support rod 113 can rotate relative to each other, which can avoid an accidental folding of the baby carrier when the fourth locking mechanism 830 is accidentally touched or the backrest support rod 112 is rotated to be substantially parallel or coincident with the armrest support rod 111, thereby greatly improving the safety performance of the baby carrier.

As shown in FIGS. 7 to 10, the fourth locking mechanism 830 includes a third locking portion provided on the armrest fixing base 200 and a fourth locking portion provided on the seat fixing base 400. The third locking portion can be operated to be locked or unlocked with the fourth locking portion, or the fourth locking portion can be operated to be locked or unlocked with the third locking portion.

Specifically, as shown in FIG. 7 to FIG. 10 and FIG. 18C, the third locking portion is a locking pin 831 movably provided on the armrest fixing base 200, the fourth locking portion is a fourth locking groove 832 provided on the seat fixing base 400 and matched with the locking pin 831. In this way, the armrest fixing base 200 and the seat fixing base 400 can be locked by a cooperation of the locking pin 831 and the fourth locking groove 832. For example, the locking pin 831 is disengaged from the fourth locking groove 832 by operating the locking pin 831, such that the fourth locking mechanism 830 can be unlocked, and the armrest fixing base 200 and the seat fixing base 400 can be rotated relative to each other, that is, the armrest support rod 111 and the seat support rod 113 can rotate relative to each other.

Further, as shown in FIG. 18C, the fourth locking groove 832 is provided on the locking boss 411. In this way, it is convenient to fix the armrest fixing base 200 and the backrest fixing base 300 at different positions. The locking pin 831 is disposed on a side of the armrest fixing base 200 facing the backrest fixing base 300. Referring to FIG. 18A, the first main body portion 210 of the armrest fixing base 200 is provided with the mounting channel 211 extending radially therethrough. One end of the locking pin 831 can extend through the mounting channel 211 to be engaged with the fourth locking groove 832, the other end of the locking pin 831 can protrude out of the mounting channel 211 to be operated. The locking boss 411 extends through the first though hole 311 so that the locked pin 831 can be engaged with the fourth locking groove 832. As shown in FIG. 18A, the mounting groove 213 and the mounting channel 211 are arranged along the same radial direction of the armrest fixing base 200, that is, the engaging block 841 and the locking pin 831 are arranged along the same radial direction of the armrest fixing base 200. Thus, the engaging block 841 and the locking pin 831 can lock the seat fixing base 400 from both opposite sides of the armrest fixing base 200. It should be understood that the positions of the locking pin 831 and the fourth locking groove 832 can also be interchanged, or the third locking portion and the fourth locking portion can be configured in other structures, such as a hook and a hole that can cooperate with each other, which are not limited hereto.

Further, as shown in FIGS. 8A, 10 and 13, the fourth locking mechanism 830 further includes a fourth elastic element 833. Two ends of the fourth elastic element 833 abut against the armrest fixing base 200 and the locking pin 831, respectively, so that the locking pin 831 has a tendency to move in a direction adjacent to the fourth locking groove 832. In this way, after the baby carrier is converted from the folded state to the unfolded state, the locking pin 831 can be automatically engaged in the fourth locking groove 832 under an action of the fourth elastic element 833, so as to lock the armrest fixing base 200 and the seat fixing base 400 again without further manual operation of the locking pin 831, which saves time and effort, and can improve safety performance.

As shown in FIG. 11C to FIG. 11G, an inner wall of the mounting channel 211 is provided with a limiting post 212, the locking pin 831 is provided with a limiting hole 831a extending radially. The limiting post 212 is inserted into the limiting hole 831a, and two ends of the fourth elastic element 833 abut against the limiting post 212 and a side of the limiting hole 831a away from the locking boss 411, respectively. In this way, the fourth elastic element 833 can help the locking pin 831 to reset. In this embodiment, the fourth elastic element 833 is a spring, it should be understood that it can also be an elastic rubber post, etc., which is not limited hereto.

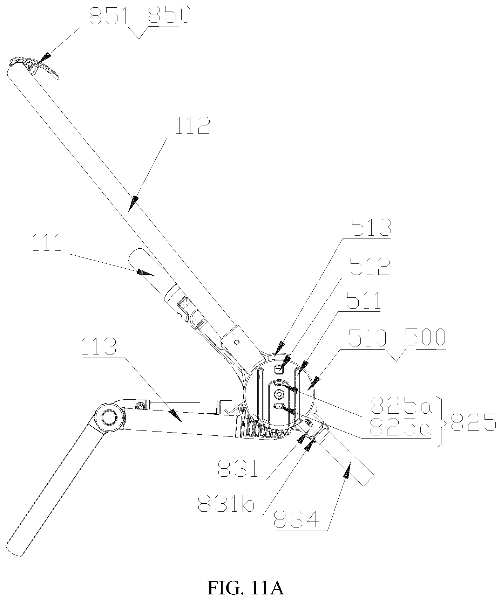

Further, as shown in FIG. 11A, the fourth locking mechanism 830 further includes an operating element 834 connected to the locking pin 831, the operating element 834 can be operated to drive the locking pin 831 to move. In this way, it is convenient for the user to operate the locking pin 831 and the user experience is improved. Optionally, the operating element 834 is a webbing, an end of the locking pin 831 protruding out of the mounting channel 211 can be provided with a through hole 831b, the webbing can extend though the through hole 831b to wound around the locking pin 831. Using the webbing as the operating element 834 can reduce the storage space, and reduce an overall weight of the baby carrier. It should be understood that, the operating element 834 can also be a pull ring, or other means fixed on the locking pin 831, which is not limited hereto.

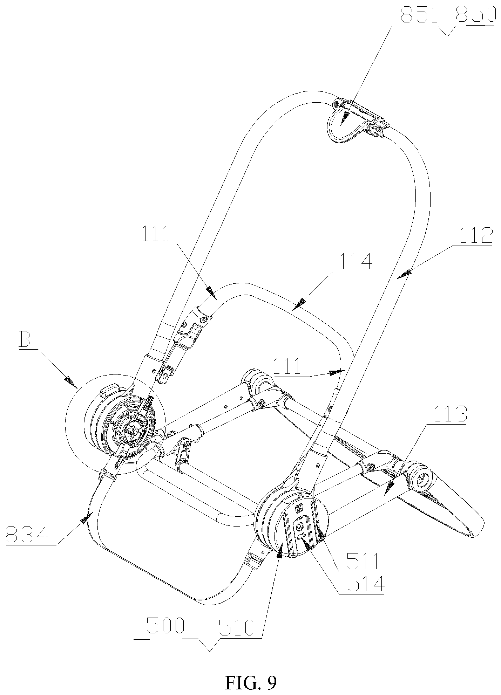

Further, as shown in FIGS. 7 and 9, the fifth locking mechanism 850 has a locked state and an unlocked state. In this embodiment, the fifth locking mechanism 850 includes a backrest unlocking element 851 disposed on a top of the backrest support rod 112. The fifth locking mechanism 850 can be converted from the locked state to the unlocked state by pressing the backrest unlocking element 851, such that an angle between the backrest support rod 112 and the armrest support rod 111 can be adjusted. When the fifth locking mechanism 850 is in the locked state, the backrest fixing base 300 and the armrest fixing base 200 are relatively locked, when the fifth locking mechanism 850 is in the unlocked state, the backrest fixing base 300 and the armrest fixing base 200 can rotate relative to each other.

A process of converting the baby carrier from the unfolded state to the folded state is described as follows.

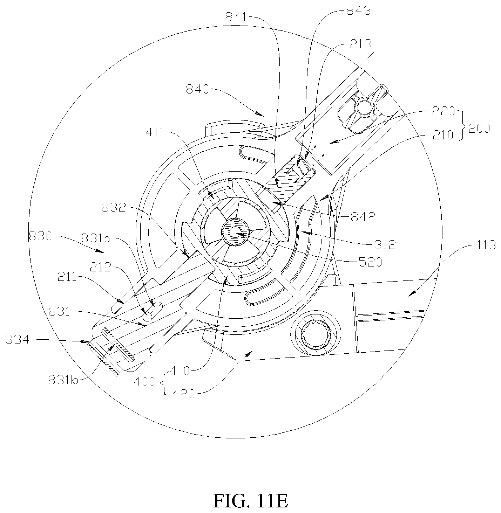

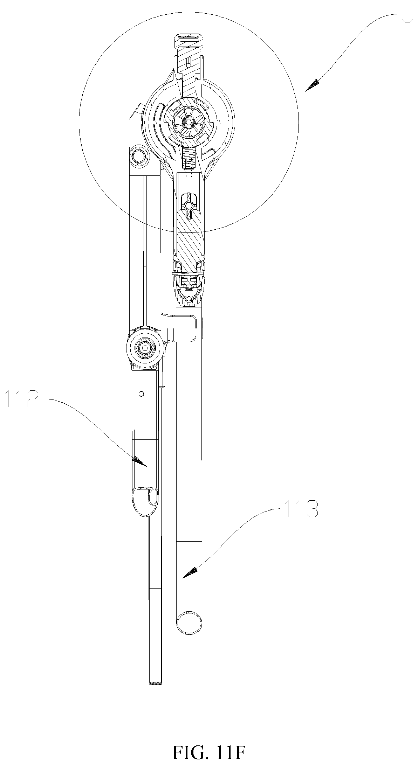

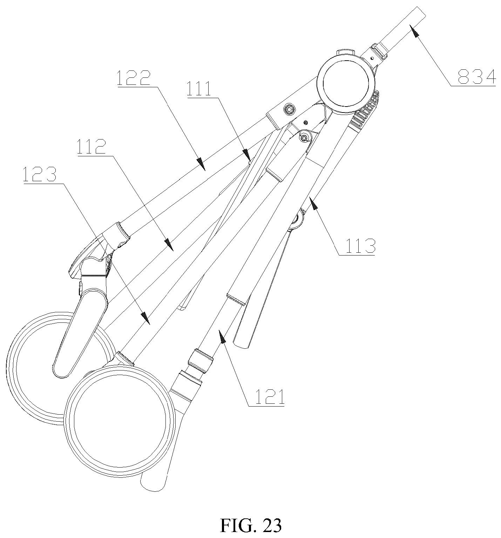

As shown in FIGS. 21 to 23, first the backrest unlocking element 851 is pressed to unlock the fifth locking mechanism 850, the backrest fixing base 300 can be rotated relative to the armrest fixing base 200 to the second position (as shown in FIG. 22), the backrest support rod 112 is coincident with or parallel to the armrest support rod 111, and the backrest support rod 112 is blocked by the armrest support rod 111 and cannot continue to rotate forward. At the same time, the third locking mechanism 840 is unlocked, and the engaging block 841 is disengaged from the engaging groove 842 (see FIG. 11E). At this time, the webbing is pulled so that the locking pin 831 is disengaged from the fourth locking groove 832, and the fourth locking mechanism 830 is unlocked, then the armrest fixing base 200 and the seat fixing base 400 can be rotated relative to each other to drive the armrest support rod 111 and the seat support rod 113 to rotate toward the direction close to the backrest support rod 112 respectively, and finally the armrest support rod 111, the seat support rod 113, and the backrest support rod 112 are in the substantially parallel state (see FIG. 11F), and the armrest support rod 111 does not tilt or protrude outwards. At the same time, when the armrest fixing base 200 is rotated, the first locking element 811 can be pushed by the driving element 813, so that the first locking element 811 is disengaged from the first locking groove 812, that is, the first locking mechanism 810 is unlocked, the seat fixing base 400 and the connection fixing base 500 can rotate with each other, that is, the seat support rod 113 can be rotated and folded relative to the frame assembly 120. Moreover, when the first locking element 811 is pushed, the pushing element 825 on the first locking element 811 will push the frame unlocking element 824 of the second locking mechanism 820, therefore the driver support rod 121 and the forefoot support rod 122 are unlocked, and the driver support rod 121 and the forefoot support rod 122 are driven to rotate and fold simultaneously. In this way, the entire baby carrier can be folded (as shown in FIG. 23).

The above-mentioned baby carrier has at least the following technical effects.

In the baby carrier, the armrest fixing base 200, the seat fixing base 400, and the connection fixing base 500 are coaxially pivoted, and the armrest fixing base 200 and the seat fixing base 400 are fixed to the frame assembly 120 through the connection fixing base 500. When the armrest support rod 111 and the seat support rod 113 are connected to the armrest fixing base 200 and the seat fixing base 400, respectively, the armrest support rod 111 and the seat support rod 113 are fixed to the frame assembly 120. The first locking mechanism 810 can control a relative fixing and a relative rotation between the seat fixing base 400 and the connection fixing base 500, that is, to control a relative fixing and a relative rotation between the seat support rod 113 and the frame assembly 120. When folding the baby carrier, the armrest fixing base 200 can be rotated to convert the first locking mechanism 810 from the locked state to the unlocked state, that is, the seat support rod 113 and the frame assembly 120 are unlocked, and the seat support rod 113 can be rotated and folded, that is, to drive the entire baby carrier to be folded, so that the overall volume of the folded baby carrier is reduced. By rotating the armrest fixing base 200 to fold the seat assembly 110 in an interacting manner, compared with a conventional method of folding the seat support rod 113 through the backrest support rod 112, the folding process can be well controlled, it is convenient to use. The situation that the seat support rod 113 is accidentally unlocked when the backrest support rod 112 is folded can be avoided, such that the baby carrier has a higher safety factor.

The foregoing descriptions are merely specific embodiments of the present disclosure, but are not intended to limit the protection scope of the present disclosure. Any variation or replacement readily figured out by a person skilled in the art within the technical scope disclosed in the present disclosure shall all fall within the protection scope of the present disclosure.

The foregoing descriptions are merely specific embodiments of the present disclosure, but are not intended to limit the protection scope of the present disclosure. Any variation or replacement readily figured out by a person skilled in the art within the technical scope disclosed in the present disclosure shall all fall within the protection scope of the present disclosure. Therefore, the protection scope of the present disclosure shall be subject to the protection scope of the appended claims.

### Preferred embodiments

1. A baby carrier, comprising:
   a frame assembly;
   a connection fixing base disposed on the frame assembly;
   an armrest fixing base and a seat fixing base both coaxially pivoted with the connection fixing base; and
   a first locking mechanism, wherein the armrest fixing base is rotated to convert the first locking mechanism from a locked state to an unlocked state, when the first locking mechanism is in the locked state, the seat fixing base and the connection fixing base are relatively fixed, when the first locking mechanism is in the unlocked state, the seat fixing base and the connection fixing base are capable of rotating relative to each other.
2. The baby carrier according to item 1, wherein the first locking mechanism comprises a first locking element and a first locking groove, the first locking element is disposed on one of the connection fixing base and the seat fixing base, the first locking groove is disposed on the other one of the connection fixing base and the seat fixing base, the armrest fixing base is rotated to disengage the first locking element from the first locking groove.
3. The baby carrier according to item 2, wherein the first locking element is disposed on the connection fixing base and is capable of reciprocating in a direction of approaching or moving away from the seat fixing base, the first locking groove is provided on the seat fixing base, the armrest fixing base is rotated to enable the first locking element to move away from the seat fixing base to disengage the first locking element from the first locking groove.
4. The baby carrier according to items 2 or 3, wherein the first locking mechanism further comprises a driving element, the armrest fixing base is rotated to drive the driving element to push the first locking element away from the seat fixing base to disengage from the first locking groove.
5. The baby carrier according to item 4, wherein the armrest fixing base has a first inclined surface, one end of the driving element has a second inclined surface matched with the first inclined surface, and the other end of the driving element abuts against the first locking element.
6. The baby carrier according to any one of items 2 to 5, wherein the first locking mechanism further comprises a first elastic element, two ends of the first elastic element abut against the first locking element and the connection fixing base, respectively, the first elastic element is configured to enable the first locking element to move toward the first locking groove.
7. The baby carrier according to any one of items 2 to 6, wherein the first locking element is a gear, and the first locking groove is a gear groove matched with the gear.
8. The baby carrier according to any one of the preceding items, further comprising a second locking mechanism, a first frame fixing base, and a second frame fixing base, wherein the first frame fixing base and the second frame fixing base are pivotally connected to each other, the frame assembly comprises a hand support rod and a forefoot support rod, the first frame fixing base and the second frame fixing base are connected to the hand support rod and the forefoot support rod, respectively, the armrest fixing base is rotated to convert the second locking mechanism from a locked state to an unlocked state, when the second locking mechanism is in the locked state, the first frame fixing base and the second frame fixing base are relatively fixed, when the second locking mechanism is in the unlocked state, the first frame fixing base and the second frame fixing base are capable of rotating relative to each other.
9. The baby carrier according to item 8, wherein the second locking mechanism comprises a second locking element, a second locking groove, and a third locking groove, the second locking groove is provided on the first frame fixing base, the third locking groove is provided on the second frame fixing base, the second locking element is engaged with the second locking groove and the third locking groove simultaneous, the armrest fixing base is rotated to drive the second locking element to disengage from one of the second locking groove and the third locking groove to convert the second locking mechanism from the locked state to the unlocked state.
10. The baby carrier according to item 9, wherein the second locking mechanism further comprises a frame unlocking element mounted on the first frame fixing base, the frame unlocking element comprises an unlocking body and an unlocking protrusion that are connected to each other, the unlocking body is disposed on a side of the first frame fixing base away from the second frame fixing base, the first frame fixing base is provided with an unlocking hole, the unlocking protrusion extends through the unlocking hole and abuts against the second locking element, the armrest fixing base is rotated to drive the unlocking protrusion to push the second locking element away from the second locking groove.
11. The baby carrier according to item 10, wherein the first locking mechanism comprises a driving element, a first locking element, and a first locking groove matched with the first locking element, the first locking element is disposed on the connection fixing base and is configured to reciprocate in a direction of approaching or moving away from the seat fixing base, the first locking groove is provided on the seat fixing base, the second locking mechanism further comprises a pushing element connected to the first locking element, the connection fixing base is provided with a pushing hole, the armrest fixing base rotates to drive the driving element to push the first locking element to move away from the seat fixing base, and enable the pushing element to extend through the pushing hole to push the frame unlocking element.
12. The baby carrier according to item 11, wherein the armrest fixing base has a first inclined surface, one end of the driving element has a second inclined surface matched with the first inclined surface, the other end of the driving element abuts against the first locking element, the first locking mechanism further comprises a first elastic element, two ends of the first elastic element abut against the first locking element and the driving element, respectively, the first elastic element is configured to enable the first locking element to move toward the first locking groove, a side of the pushing element away from the first elastic element has an pushing rib, the pushing rib extends through the connection fixing base and abuts against the frame unlocking element.
13. The baby carrier according to any one of items 9 to 12, wherein the second locking mechanism further comprises a second elastic element, two ends of the second elastic element abut against the second locking element and the second frame fixing bases, respectively, the second elastic element is configured to enable the second locking element to move toward the second locking groove.
14. The baby carrier according to any one of items 8 to 13, wherein the connection fixing base and the first frame fixing base are detachably connected.
15. The baby carrier according to item 14, wherein the connection fixing base is provided with an engaging element, the first frame fixing base is provided with an engaging hole matched with the engaging element.
16. The baby carrier according to item 15, wherein the connection fixing base further comprises a connection unlocking element, the connection unlocking element is driven to enable the engaging element to move away from the first frame fixing base to be disengaged from the engaging hole.
17. The baby carrier according to any one of the preceding items, further comprising a backrest fixing base and a third locking mechanism, wherein the armrest fixing base, the backrest fixing base, the seat fixing base are coaxially pivoted, when the backrest fixing base rotates relative to the armrest fixing base to a first position, the third locking mechanism locks the armrest fixing base and the seat fixing base, when the backrest fixing base rotates relative to the armrest fixing base to a second position, the third locking mechanism unlocks the armrest fixing base and the seat fixing base.
18. The baby carrier according to item 17, wherein the third locking mechanism comprises a first locking portion provided on the armrest fixing base and a second locking portion provided on the seat fixing base, when the backrest fixing base rotates relative to the armrest fixing base to the first position, the first locking portion is locked with the second locking portion, when the backrest fixing base rotates relative to the armrest fixing base to the second position, the first locking portion and the second locking portion are unlocked.
19. The baby carrier according to item 18, wherein the first locking portion is an engaging block disposed on the armrest fixing base, the second locking portion is an engaging groove provided on the seat fixing base and matched with the engaging block.
20. The baby carrier according to item 19, wherein the backrest fixing base is provided with a first though hole, a side of the seat fixing base facing the backrest fixing base is provided with a locking boss, the engaging groove is provided on the locking boss, the engaging block is disposed on a side of the armrest fixing base facing the backrest fixing base, the locking boss extends through the first though hole to enable the engaging block to be engaged in the engaging groove.
21. The baby carrier according to items 19 or 20, wherein the backrest fixing base is provided with a guiding groove, distances between different positions of the guiding groove and an opening of the engaging groove are different, the engaging block comprises an engaging portion and a guiding post, the engaging portion is inserted into the engaging groove, the guiding post is slidably received in the guiding groove, when the backrest fixing base rotates relative to the armrest fixing base to the second position, the engaging block moves along the guiding groove to disengage the engaging portion from the engaging groove, when the backrest fixing base rotates relative to the armrest fixing base to the first position, the engaging block moves along the guiding groove to enable the engaging portion to be inserted into the engaging groove.
22. The baby carrier according to any one of items 19 to 21, wherein the third locking mechanism further comprises a third elastic element, two ends of the third elastic element abut against the armrest fixing base and the engaging block, respectively, the third elastic element is configured to enable the engaging block to move toward the engaging groove.
23. The baby carrier according to item 22, wherein the armrest fixing base is provided with a mounting groove extending radially, the engaging block is disposed in the mounting groove, the engaging portion of the engaging block protrudes from an opening of the mounting groove to be engaged in the engaging groove, two ends of the third elastic element abut against the engaging block and a bottom of the mounting groove, respectively.
24. The baby carrier according to item 23, wherein the engaging block is provided with a mounting platform, the mounting platform comprises an abutting portion and a protruding portion that are connected to each other, the third elastic element is sleeved on the protruding portion, and an end of the third elastic element away from the bottom of the mounting groove abuts against the abutting portion.
25. The baby carrier according to any one of the preceding items, further comprising a backrest fixing base and a fourth locking mechanism configured to lock the armrest fixing base and the seat fixing base, wherein when the backrest fixing base rotates relative to the armrest fixing base to a second position, the fourth locking mechanism is operated to unlock the armrest fixing base and the seat fixing base.
26. The baby carrier according to item 25, wherein the fourth locking mechanism comprises a third locking portion provided on the armrest fixing base and a fourth locking portion provided on the seat fixing base, the third locking portion is operated to be locked or unlocked with the fourth locking portion, or the fourth locking portion is operated to be locked or unlocked with the third locking portion.
27. The baby carrier according to item 26, wherein the third locking portion is a locking pin movably provided on the armrest fixing base, the fourth locking portion is a fourth locking groove provided on the seat fixing base and matched with the locking pin.
28. The baby carrier according to item 27, wherein the backrest fixing base is provided with a first though hole, a side of the seat fixing base facing the backrest fixing base is provided with a locking boss, the fourth locking groove is disposed on the locking boss, the locking pin is disposed on a side of the armrest fixing base facing the backrest fixing base, the locking boss extends through the first though hole to lock the locking pin in the fourth locking groove.
29. The baby carrier according to item 27 or 28, wherein the fourth locking mechanism further comprises a fourth elastic element, two ends of the fourth elastic element abut against the armrest fixing base and the locking pin, respectively, the fourth elastic element is configured to enable the locking pin to move toward the locking groove.
30. The baby carrier according to item 29, wherein the armrest fixing base is provided with a mounting channel extending radially therethrough, an end of the locking pin extends through the mounting channel to match with the locking groove, an inner wall of the mounting channel is provided with a limiting post, the locking pin is provided with a limiting hole extending radially, the limiting post is inserted into the limiting hole, and the two ends of the fourth elastic element abut against the limiting post and a side of the limiting hole away from the locking boss, respectively.
31. The baby carrier according to any one of items 27 to 30, wherein the fourth locking mechanism further comprises an operating element connected to the locking pin, the operating element is operated to drive the locking pin to move.
32. The baby carrier according to item 31, wherein the operating element is a webbing.
33. A seat assembly of a baby carrier, comprising:
   an armrest support rod, a backrest support rod, a seat support rod, an armrest fixing base, a backrest fixing base, and a seat fixing base;
   wherein the armrest support rod is connected to the armrest fixing base, the backrest support rod is connected to the backrest fixing base, the seat support rod is connected to the seat fixing base, wherein the armrest fixing base, the backrest fixing base, and the seat fixing base are coaxially pivoted, the armrest fixing base and the seat fixing base are rotated with a rotation of the backrest fixing base.
34. The seat assembly according to item 33, further comprising a third locking mechanism, wherein when the backrest fixing base rotates relative to the armrest fixing base to a first position, the third locking mechanism locks the armrest fixing base and the seat fixing base, when the backrest fixing base rotates relative to the armrest fixing base to a second position, the third locking mechanism unlocks the armrest fixing base and the seat fixing base.
35. The seat assembly according to item 34, wherein the third locking mechanism comprises a first locking portion provided on the armrest fixing base and a second locking portion provided on the seat fixing base, when the backrest fixing base rotates relative to the armrest fixing base to the first position, the first locking portion is locked with the second locking portion, when the backrest fixing base rotates relative to the armrest fixing base to the second position, the first locking portion and the second locking portion are unlocked.
36. The seat assembly according to item 34 or 35, wherein the first locking portion is an engaging block disposed on the armrest fixing base, and the second locking portion is an engaging groove provided on the seat fixing base and matched with the engaging block.
37. The seat assembly according to any one of items 33 to 36, further comprising a connection fixing base, wherein the connection fixing base is provided with a mounting shaft, the seat fixing base, the backrest fixing base, and the armrest fixing base are coaxially and pivotally sleeved on the mounting shaft.
38. The seat assembly according to any one of items 33 to 37, further comprising a fifth locking mechanism, wherein when the fifth locking mechanism is in a locked state, the backrest fixing base and the armrest fixing base are relatively locked, when the fifth locking mechanism is in an unlocked state, the backrest fixing base and the armrest fixing base are capable of rotating relative to each other.

## Claims

1. A baby carrier, comprising:
a frame assembly (120);
a connection fixing base (500) disposed on the frame assembly (120);
an armrest fixing base (200) and a seat fixing base (400) both pivoted with the connection fixing base (500); and
a second locking mechanism (820), a first frame fixing base (600), and a second frame fixing base (700), wherein the first frame fixing base (600) and the second frame fixing base (700) are pivotally connected to each other, the armrest fixing base (200) is rotated to convert the second locking mechanism (820) from a locked state to an unlocked state, when the second locking mechanism (820) is in the locked state, the first frame fixing base (600) and the second frame fixing base (700) are relatively fixed, when the second locking mechanism (820) is in the unlocked state, the first frame fixing base (600) and the second frame fixing base (700) are capable of rotating relative to each other.

2. The baby carrier according to claim 1, wherein the second locking mechanism (820) comprises a second locking element (821), a second locking groove, and a third locking groove (823), the second locking groove is provided on the first frame fixing base (600), the third locking groove (823) is provided on the second frame fixing base (700), when the second locking element (821) is simultaneously engaged with the second locking groove and the third locking groove (823), the second locking mechanism (820) is in the locked state, the armrest fixing base (200) is rotated to drive the second locking element (821) to disengage from one of the second locking groove and the third locking groove (823) to convert the second locking mechanism (820) from the locked state to the unlocked state.

3. The baby carrier according to claim 2, wherein the second locking mechanism (820) further comprises a frame unlocking element (824) mounted on the first frame fixing base (600), the frame unlocking element (824) comprises an unlocking body (824a) and an unlocking protrusion (824b) that are connected to each other, the unlocking body (824a) is disposed on a side of the first frame fixing base (600) away from the second frame fixing base (700), the first frame fixing base (600) is provided with an unlocking hole (613), the unlocking protrusion (824b) extends through the unlocking hole (613) and abuts against the second locking element (821), the armrest fixing base (200) is rotated to drive the unlocking protrusion (824b) to push the second locking element (821) away from the second locking groove.

4. The baby carrier according to any one of the preceding claims, wherein the second locking mechanism (820) further comprises a frame unlocking element (824) and a pushing element (825), the frame unlocking element (824) is mounted on the first frame fixing base (600), the armrest fixing base (200) rotates to drive the pushing element (825) to push the frame unlocking element (824), so as to convert the second locking mechanism (820) from the locked state to the unlocked state.

5. The baby carrier according to claim 4, wherein the connection fixing base (500) is provided with a pushing hole (514), the pushing element (825) has a pushing rib (825a), the armrest fixing base (200) rotates to drive the pushing rib (825a) to extend through the pushing hole (514) and abut against the frame unlocking element (824).

6. The baby carrier according to claim 5, further comprising a first locking mechanism (810), wherein the first locking mechanism (810) comprises a first locking element (811), the pushing element (825) is fixed to the first locking element (811), the armrest fixing base (200) is rotated to convert the first locking mechanism (810) from a locked state to an unlocked state, the armrest fixing base (200) is rotated to enable the first locking element (811) to move away from the seat fixing base (400), the pushing rib (825a) extends through the pushing hole (514) and abut against the frame unlocking element (824);
wherein when the first locking mechanism (810) is in the locked state, the seat fixing base (400) and the connection fixing base (500) are relatively fixed, when the first locking mechanism (810) is in the unlocked state, the seat fixing base (400) and the connection fixing base (500) are capable of rotating relative to each other;
wherein when the second locking mechanism (820) is in the unlocked state, the first locking mechanism (810) is in the unlocked state.

7. The baby carrier according to any one of the preceding claims, wherein the connection fixing base (500) and the first frame fixing base (600) are detachably connected, the connection fixing base (500) is provided with an engaging element (512), the first frame fixing base (600) is provided with an engaging hole (612) matched with the engaging element (512), the connection fixing base (500) further comprises a connection unlocking element (513), the connection unlocking element (513) is driven to enable the engaging element (512) to move away from the first frame fixing base (600) to be disengaged from the engaging hole (612).

8. The baby carrier according to any one of the preceding claims, further comprising a backrest fixing base (300) and a third locking mechanism (840), wherein the armrest fixing base (200), the backrest fixing base (300), the seat fixing base (400) are coaxially pivoted, when the backrest fixing base (300) rotates relative to the armrest fixing base (200) to a first position, the third locking mechanism (840) locks the armrest fixing base (200) and the seat fixing base (400), when the backrest fixing base (300) rotates relative to the armrest fixing base (200) to a second position, the third locking mechanism (840) unlocks the armrest fixing base (200) and the seat fixing base (400).

9. The baby carrier according to claim 8, wherein the third locking mechanism (840) comprises a first locking portion provided on the armrest fixing base (200) and a second locking portion provided on the seat fixing base (400), when the backrest fixing base (300) rotates relative to the armrest fixing base (200) to the first position, the first locking portion is locked with the second locking portion, when the backrest fixing base (300) rotates relative to the armrest fixing base (200) to the second position, the first locking portion and the second locking portion are unlocked.

10. The baby carrier according to claim 9, wherein the first locking portion is an engaging block (841) disposed on the armrest fixing base (200), and the second locking portion is an engaging groove (842) provided on the seat fixing base (400) and matched with the engaging block (841).

11. The baby carrier according to claim 10, wherein the backrest fixing base (300) is provided with a first through hole (311), a side of the seat fixing base (400) facing the backrest fixing base (300) is provided with a locking boss (411), the engaging groove (842) is provided on the locking boss (411), the engaging block (841) is disposed on a side of the armrest fixing base (200) facing the backrest fixing base (300), the locking boss (411) extends through the first through hole (311) to enable the engaging block (841) to be engaged in the engaging groove (842).

12. The baby carrier according to claim 10 or 11, wherein the backrest fixing base (300) is provided with a guiding groove (312), distances between different positions of the guiding groove (312) and an opening of the engaging groove (842) are different, the engaging block (841) comprises an engaging portion (841a) and a guiding post (841b), the engaging portion (841a) is inserted into the engaging groove (842), the guiding post (841b) is slidably received in the guiding groove (312), when the backrest fixing base (300) rotates relative to the armrest fixing base (200) to the second position, the engaging block (841) moves along the guiding groove (312) to disengage the engaging portion (841a) from the engaging groove (842), when the backrest fixing base (300) rotates relative to the armrest fixing base (200) to the first position, the engaging block (841) moves along the guiding groove (312) to enable the engaging portion (841a) to be inserted into the engaging groove (842).

13. The baby carrier according to claim 8, further comprising a fourth locking mechanism (830) configured to lock the armrest fixing base (200) and the seat fixing base (400), wherein when the backrest fixing base (300) rotates relative to the armrest fixing base (200) to a second position, the fourth locking mechanism (830) is operated to unlock the armrest fixing base (200) and the seat fixing base (400), and the armrest fixing base (200) can rotate relative to the seat fixing base (400).

14. The baby carrier according to claim 13, wherein the fourth locking mechanism (830) comprises a third locking portion provided on the armrest fixing base (200) and a fourth locking portion provided on the seat fixing base (400), the third locking portion is operated to be locked or unlocked with the fourth locking portion, or the fourth locking portion is operated to be locked or unlocked with the third locking portion.

15. The baby carrier according to claim 14, wherein the third locking portion is a locking pin (831) movably provided on the armrest fixing base (200), the fourth locking portion is a fourth locking groove (832) provided on the seat fixing base (400) and matched with the locking pin (831), the backrest fixing base (300) is provided with a first through hole (311), a side of the seat fixing base (400) facing the backrest fixing base (300) is provided with a locking boss (411), the fourth locking groove (832) is disposed on the locking boss (411), the locking pin (831) is disposed on a side of the armrest fixing base (200) facing the backrest fixing base (300), the locking boss (411) extends through the first through hole (311) to lock the locking pin (831) in the fourth locking groove (832).
